# EUROPÄISCHE PATENTSCHRIFT

(11) **EP 1 366 989 B1**
(45) Veröffentlichungstag und Bekanntmachung des Hinweises auf die Patenterteilung: **14.08.2013**
(21) Anmeldenummer: 02011739.6
(22) Anmeldetag: 27.05.2002
(51) Int. Cl.: B64F 1/20, G01J 1/42

(54) **Verfahren und Vorrichtung zur Überprüfung von Leuchtmitteln und Lichtsignalen**
Method and device for testing illumination means and light signals
Méthode et dispositif pour tester des moyens d'éclairage et des signaux lumineux

(43) Veröffentlichungstag der Anmeldung: 03.12.2003
(73) Patentinhaber: DeWiTec GmbH, 44319 Dortmund (DE)
(72) Erfinder: Stefan Wichmann, 51674 Weihl (DE)
(74) Vertreter: Lüdcke, Joachim Moritz

(56) Entgegenhaltungen:
- EP-A- 0 558 405
- DE-A- 2 923 452
- DE-A- 19 521 880
- DE-A- 19 638 693
- DE-A- 19 742 093
- GB-A- 1 454 272
- GB-A- 1 602 285
- US-A- 5 890 089

## Beschreibung

Die Erfindung betrifft eine Vorrichtung und ein Verfahren zur Überprüfung von Leuchtmitteln und Lichtsignalen insbesondere an Verkehrswegen.

Leuchtmittel, die insbesondere an Verkehrswegen zur Orientierung der Verkehrsteilnehmer oder zur Übermittlung von Verhaltensanweisungen dienen, umfassen Lichtquellen und reflektierende Materialien. Sie dienen normalerweise nicht zu Beleuchtungszwecken und haben teilweise sehr große Bedeutung hinsichtlich der Verkehrssicherheit.

Im Straßenverkehr werden für die Verkehrslenkung vorwiegend reflektierende Mittel eingesetzt, beispielsweise in Form von Verkehrszeichen, die reflektierendes Folienmaterial umfassen, oder Fahrbahnmarkierungen mit reflektierenden Farben. Eine gute Sichtbarkeit bei Nacht setzt jedoch voraus, dass das Fahrzeug selbst über Scheinwerfer für eine ausreichende Beleuchtung verfügt, um den Verkehrsweg auszuleuchten. Dies lässt sich auf Straßen insbesondere deshalb gut realisieren, da die zu überbrückenden Entfernungen sehr gering sind. In besonders gefährlichen Bereichen ist es aber auch bekannt, in die Fahrbahn Leuchtenreihen einzusetzen, die dem Autofahrer den Verlauf des Fahrstreifens anzeigen. Insbesondere haben sich solche unter Flur eingesetzten Leitleuchten in Bereichen bewährt, wo abhängig von der Verkehrsdichte der Verlauf der Fahrstreifen geändert wird und es demzufolge zweckmäßig ist, wenn der Verlauf der Fahrstreifen durch Umschalten der entsprechenden Markierungen verändert werden kann. Ein bekanntes Beispiel solche Unterflur-Leuchten zur Fahrstreifenkennzeichnung findet sich in den Ein- und Ausfahrtrampen zur Mittelröhre des Elbtunnels im Verlauf der Autobahn A7.

Bei der Schifffahrt und im Luftverkehr werden Leuchtzeichen, die der Orientierung der Verkehrsteilnehmer dienen, üblicherweise als "Feuer" bezeichnet, wenn sie ortsfest sind, im Unterschied zu "Lichtern", mit denen insbesondere die Positionierung von Fahrzeugen den anderen Verkehrsteilnehmern signalisiert werden.

Solche Feuer dienen nicht nur als großräumige Navigationshilfe bei Nacht, sondern auch insbesondere zur Warnung vor gefährlichen Hindernissen und zur Verkehrslenkung. Von besonderer Bedeutung ist dabei die Befolgung der Ansteuerungswege zu Häfen und Flugplätzen, bei letzteren insbesondere der Verlauf von Landebahnen.

Um die gewünschten Effekte zur Verkehrslenkung zu erzielen, sind für solche Feuer bestimmte Abstrahlwinkel genau festgelegt, um beispielsweise das Abweichen bei vor einem vorgesehenen Ansteuerkurs erkennbar machen zu können, beispielsweise durch Farbwechsel. Entsprechend den Erfordernissen des betroffenen Verkehrsmittels wird dazu ferner eine von der Funktion und Bedeutung des Feuers meist abhängige (Mindest-) Tragweite vorgeschrieben, d. h., dass das Feuer unter bestimmten Normbedingungen aus einer bestimmten Mindestentfernung wahrgenommen werden kann. Dies hat seinen Grund darin, dass eine reine Leistungs- oder Helligkeitsangabe nicht zu gleichen Ergebnissen führt, insbesondere, wenn die Feuer mit einem bestimmten Farbfilter versehen sind, wodurch sich die Absorption des Lichtes in der Atmosphäre verändert, aber auch das menschliche Auge unterschiedlich empfindlich auf verschiedenfarbige Lichtquellen gleicher objektiver Helligkeit reagiert.

In der Praxis besteht in der Regel ein besonderes Problem darin, dass diese Tragweite nicht nur bei einem Feuer im Neuzustand gewährleistet sein muss, sondern auch über seine Gebrauchsdauer hinweg. Allerdings wird die Tragweite von Feuern bei längerem Gebrauch durch viele Umstände beeinträchtigt, beginnend mit schlichter Verschmutzung durch atmosphärischen Staub und Regen, sowie Witterungseinflüsse, die insbesondere in Verbindung mit Staub zu einer Erblindung optischer Bauelemente des Feuers führen können. Hinzu kommen chemische Angriffe durch Salz im Seeschiffsverkehr oder Auftaumittel bei Landebahnbeleuchtungen. Hierzu hat die britische Zivilluftfahrtbehörde CAA darauf hingewiesen, dass bereits einen einzige Anwendung von Auftaumitteln die Lichtabgabe eines Landebahnmittenfeuers (Runway Center Line) um bis zu 70 % vermindern kann. Bei Landebahnen kommt noch ein wesentlicher Verschmutzungsfaktor durch das Überrollen von in Landebahnen eingelassenen Unterflur-Feuern durch die Reifen der Flugzeuge dazu, was je nach Position des Feuers auf der Landebahn zu mehr oder weniger starkem Gummiabrieb auf dem Feuer führt.

Unterflur-Feuer, die die Aufsetzzone bei Landebahnen auf Verkehrsflughäfen markieren, verlieren sehr schnell einen erheblichen Teil ihrer Tragweite, da durch die hohe Reibung der Reifen des Fahrwerks beim Aufsetzen von schweren Verkehrsmaschinen Gummiabrieb von den Reifen regelrecht in die Oberfläche der Feuerabdeckungen eingebrannt wird.

Die Regelungen der internationalen Zivilluftfahrtbehörde ICAO für die Ausgestaltung von Flughafenbefeuerungen schreiben daher insbesondere für die Landebahnbefeuerungen vor, dass die Feuer auch im Betrieb bestimmte Mindestwerte ihrer ursprünglichen Leuchtkraft liefern müssen, ansonsten ist ein Ersatz oder eine Instandsetzung des Feuers vorzunehmen. Diese Vorschriften sind im Wesentlichen im ICA0-Anne 14 festgelegt und veröffentlicht.

In der Praxis wird dem dadurch Rechnung getragen, dass Lampen oder Feuer ersetzt werden, wenn sie ausgefallen sind, oder turnusmäßig nach einem bestimmten Zeitablauf, der in Abhängigkeit von der Verkehrsdichte festgelegt wird. Es liegt auf der Hand, dass dabei natürlich auch zahlreiche Feuer ausgewechselt werden, die noch völlig in Ordnung sind. Andererseits bleiben so zahlreiche Feuer noch monatelang in Betrieb, obwohl sie nicht mehr die erforderliche Mindesttragweite erreichen, so dass beispielsweise eine Landebahn für ein anfliegendes Flugzeug schlechter erkennbar ist und somit insbesondere bei schlechten Sichtbedingungen ein zusätzliches Sicherheitsrisiko entsteht.

Für die einzelnen Feuerarten und -farben insbesondere für die Landebahnbefeuerungen sind die Tragweitenwerte entsprechend in Lichtstärkendiagramme umgerechnet, in denen die Raumwinkelorte gleicher (Mindest-)Lichtstärke nach Elevation, z.B. über der Landebahn, und in horizontaler Richtung, z.B. bezogen auf den Längsverlauf einer Landebahn, durch Linien verbunden sind, sogenannte Isocandela-Diagramme. Solche Isocandela-Diagramme, in denen die Abstrahlcharakteristika der Bodenfeuer für die Zivilluftfahrt festgelegt sind, sind im Appendix 2 zum ICAO-Annex 14 abgedruckt.

Dabei ist zu beachten, dass sich die Anforderungen an die Abstrahlcharakteristik nicht auf die mittlere Keule maximaler Intensität (auch als "Main Beam" bezeichnet) beschränkt, sondern auch die Randbereiche mit bestimmten einzuhaltenden Mindestlichtstärken definiert sind.

Da die in der Vergangenheit vorgenommene und eingangs beschriebenen Methode der Instandhaltung von Flugplatzfeuern aus den oben näher beschriebenen Gründen nicht zufriedenstellend ist, hat beispielsweise die britische Civil Aviation Authority CAA in ihrer Notice to Aerodrome License Holders 3/97 empfohlen, die Leuchtkraft der Feuer einer regelmäßigen Prüfung zu unterziehen und gemäß dem Ergebnis einer solchen Überprüfung gezielt instandzusetzen. Für einen Verkehrsflughafen mit hohem Verkehrsaufkommen wird dabei eine wöchentliche Überprüfung als angemessen angesehen.

Die Verwendung einer mobilen Messeinrichtung zur Überprüfung von Landebahnfeuern im Betriebszustand wird für Landebahnen mit Präzisionsanflugverfahren der Kategorien II und III zumindest zwei mal jährlich für Unterflurfeuer im ICAO Annex 14, Kapitel 9, Abschnitt 9.4., Unterabschnitte 24 und 25 empfohlen. Dabei wird eine Landebahn im Sinne der Vorschriften für Kategorie II und III Landebahnen als ausreichend angesehen, wenn bestimmte Ausfallraten nicht überschritten werden, wie sie a.a.0., Unterabschnitt 9.4.26 festgelegt sind.

Durch offenkundige Vorbenutzung und begleitende Dokumentation sind zwei Systeme bekannt, mit denen die Feuer von Flugplätzen bezüglich Landebahnen und Taxi-Wegen im Betrieb messtechnisch auf ausreichende Lichtabgabe überprüft werden können sollen.

Eines dieser Systeme wird in Großbritannien unter der Bezeichnung MALMS angepriesen durch ein Unternehmen, dass die Bezeichnungen Taylor Made Systems oder TMS Photometrics benutzt. Das System soll dabei einen Messaufbau umfassen sowie eine Computersoftware, mit der die Messergebnisse später ausgewertet und dokumentiert werden sollen.

Der Messaufbau umfasst dabei ein auf einem Fahrzeuganhänger montiertes Gestell, dass eine Matrix-Anordnung von lichtempfindlichen Sensoren aufweist, die entsprechend dem Abstand bei der Messung von dem Feuer zur Erfassung des Main Beam nach ICA0 Annex 14 auf eine entsprechend große Fläche verteilt sind. Nach den Angaben der Fa. TMS soll die Intensitätsmessung mit größtmöglichen Abstand von dem Feuer durchgeführt werden. Eine ausreichend große Anzahl an Sensoren ist vorzusehen, um eine gleichmäßige Verteilung an Messpunkten über den erfassten Winkelbereich zu erhalten. Hierzu wird eine Anzahl von 9 Sensoren gezeigt.

Weiterhin ist an dem Anhänger ein zweites Gestell mit lichtempfindlichen Sensoren vorgesehen, mit denen beim Überfahren eines Unterflurfeuers eine zu große Abweichung von der Mitte feststellbar sein soll, damit zu fehlerhafte Messungen der Sensormatrix erkannt werden können. Hierzu wird angegeben, dass diese Einrichtung eine Mittenabweichung von 0,25 m erkennen soll.

Weiterhin soll der Anhänger mit einem Navigationsmodul ausgerüstet sein, über das sch die Position des Messortes und damit des Feuers erfassen lassen soll. Dieses Navigationsmodul soll im wesentlichen einen Differential-GPS Empfänger zur Positionsbestimmung enthalten. Bei dem Differential-GPS (dGPS) wird das aus den Signalen des satellitengestützten Global Positioning System der US-Streitkräfte errechnete Signal mit einem zeitgleich typischerweise von einen Langwellensender bekannter Position empfangene Korrektursignal verrechnet, um eine bessere Genauigkeit zu erhalten, als bei Verwendung von GPS allein.

Ferner umfasst das System auf dem Anhänger noch einen sogenannten Datenlogger, ein Gerät zur Sammlung und Speicherung der Messdaten. Schließlich enthält das System noch einen Kreiselkompass, mit dessen Hilfe Abweichungen des Fahrzeugkurses von der Feuerkette ermittelt werden sollen, um damit Fahrfehler zu kompensieren.

Zur Durchführung der Überprüfung wird der Anhänger an ein geeignetes Zugfahrzeug gehängt, nähere Anforderungen sind nicht bekannt, auch nicht hinsichtlich der erforderlichen Stromversorgung des Messaufbaus. Dann wird beispielsweise die Kette der Landebahnmittenfeuer abgefahren und zwar gegen die Landerichtung für Flugzeuge. Dies bedeutet, dass der Anhänger mit dem Messaufbau erst an dem Feuer vorbeigefahren wird, bevor eine Messung erfolgt.

Später wird der Datenlogger an einen stationären Computer angeschlossen, die Daten werden dorthin übertragen und ausgewertet. Wird dabei en Feuer als überholungsbedürftig ermittelt, wird die dazu gespeicherte Positionsangabe des Navigationsmoduls in eine geeignete Wartungsliste übernommen. Weiterhin wird noch eine zusätzliche PC-Software zur Dokumentation verschiedener Überprüfungen und zur Verwaltung der Protokolle angeboten.

Das zweite durch offenkundige Vorbenutzung und begleitende Dokumentation bekannte System wird von der Firma FB Technology, Le Plessis Robinson Cedex, Frankreich, angeboten. Das System umfaßt eine Messeinrichtung mit Protokollierung unter der Bezeichnung PAC und eine Verwaltungs- und Dokumentationssoftware GAMMA.

Die Messeinrichtung umfasst ebenfalls ein Gestell zur Aufnahme von lichtempfindlichen Sensoren, wobei das Gestell die Form eines Auslegers aufweist, der an der Vorderseite eines Fahrzeuges, zum Beispiel eines Transporters oder LKW's, montiert werden kann. Für die Messung wird bei diesem System beispielsweise bei einer Landebahn in Landerichtung des Flugzeugs gefahren. Unklar ist, ob dabei bei in Gruppen angeordneten Feuern eine ausreichende Abschirmung gegen Störung der Messung durch benachbarte Feuer derselben Gruppe erreicht wird. Es sind hierzu Anweisungen bekannt, die benachbarten Feuer durch Abschalten von Stromkreisen auszuschalten. Die stößt in der Praxis jedoch auf erhebliche Schwierigkeiten, da aus Sicherheitsgründen die Feuer meist intermittierend auf mehrere Stromkreise aufgeteilt sind, damit bei Ausfall eines Stromkreises nicht etwa eine ganze Reihe von Feuern z.B. der Befeuerung der Touch Down Zone (TDZ) ausfällt. Gerade bei den eng mit Feuern bestückten "Lichtteppichen" werden die Stromkreise gemäss ICAO Empfehlungen und deutschen Vorschriften so verlegt, dass auch bei Ausfall eines oder mehrerer Stromkreise noch das Bild der Befeuerung erkennbar und damit der Anzeigefunktion der Feuer erhalten bleibt.

Weiterhin soll das System ein Messrad nach Art eines Peiseler-Rades umfassen, das den zurückgelegten Weg misst. Die Wegmesseinrichtung wird am Anfang einer Messfahrt von Hand genullt und gibt jeweils nach Erreichen einer einem voreingestellten Soll-Abstand der zu überprüfenden Feuer entsprechenden Strecke ein Triggersignal zur Durchführung einer Messung für das nächste Feuer an einer Steuerung der Messeinrichtung aus.

Ein bekannter Nachteil dieses Systems liegt darin, dass der Fahrer das Fahrzeug gegen das Licht der Feuer steuern muss. Aufgrund der hohen Lichtstärke der Feuer führt diese Vorgehensweise zu einer enorm starken Blendung des Fahrers und damit zu Ungenauigkeiten bei der Erfassung, da ein Fahrer unter solchen Sichtbedingungen eine Reihe von Feuern kaum mit der notwendigen Genauigkeit abfahren kann. Da solche Messungen schon zur Vermeidung der Überlagerung der Messung durch Tageslicht typischerweise nachts durchgeführt werden, besteht zudem wegen der Nachwirkung der andauernden Blendung ein erhöhtes Unfallrisiko, wenn der Fahrer nach Abschluss einer Messreihe das Fahrzeug außerhalb der Landebahn führt.

Weitere Vorrichtungen werden in EP558405, GB2275333 und GB1454272 offenbart.

Der Erfindung liegt daher die Aufgabe zugrunde, eine Vorrichtung und ein Verfahren zur Überprüfung von Leuchtmitteln und Lichtsignalen insbesondere an Verkehrswegen bereitzustellen, das/die einfach aufzubauen und leicht und zuverlässig handzuhaben ist.

Diese Aufgabe wird erfindungsgemäß gelöst durch eine Vorrichtung (bzw. ein Verfahren) mit den Merkmalen von Anspruch 1 (bzw. 26).

Durch die erfindungsgemäße Ausbildung der Vorrichtung ist es erstmals möglich, die Intensität beispielsweise von Unterflurfeuern auf Landebahnen aus geringer Entfernung zu messen und dabei einen weiten Abstrahlwinkelbereich zu erfassen. Dadurch ist beispielsweise bei Landebahnfeuern anders als bei bisher bekannten Systemen eine Beurteilung der Einhaltung von Sollwerten der Lichtabgabe auch außerhalb des sogenannten Main Beams möglich, so dass auch eine vorschriftsmäßige Sichtbarkeit des Feuers auch von seitlich oder ober-/unterhalb der optischen Achse überprüft werden kann.

Durch den kurzen Messabstand kann eine höhere Genauigkeit und Zuverlässigkeit erzielt werden, da die atmosphärische Sichtweite, die durch Umwelteinflüsse beeinflusst wird, wie Staub oder Dunst, eine gegenüber den bekannten Systemen wesentlich geringeren, wenn nicht vernachlässigbaren Einfluss auf die Genauigkeit der Messung hat. Auch haben andere Lichtquellen, insbesondere benachbarte Feuer keinen oder nur geringen Einfluss auf die Messung, da durch den kurzen Messabstand das Intensitätsverhältnis von zu überprüfendem Feuer zu Nachbarfeuern (Nutzsignal zu Störsignal) um mehrere Größenordnungen größer ist, als bei der Verwendung der bekannten Systeme.

Weiterhin ist es erfindungsgemäß möglich, die lichtempfindlichen Sensorelemente mitsamt der dafür notwendigen Betriebeselektronik insbesondere witterungsgeschützt in einem Gehäuse unterzubringen, auch ist eine Montage oder Ausrichtung vor einem Messeinsatz nicht erforderlich.

Für eine hohe Genauigkeit und Zuverlässigkeit des Messergebnisses einschließlich der z.B. nach ICAO-Annex 14 vorgeschriebenen Mittelwertbildung in genau umgrenzten Schichten des abgestrahlten Lichtkegels ist es vorteilhaft, wenn die erfindungsgemäße Vorrichtung, dadurch gekennzeichnet ist, dass die Messeinrichtung wenigstens 20.000, vorzugsweise 300.000, weiter vorzugsweise mehr als 700.000, insbesondere mehr als 1.300.000 Sensorelemente umfasst.

Insbesondere für hohe Messgeschwindigkeiten und/oder bei Feuern niedriger Nennlichtintensität kann es vorteilhaft sein, wenn jeweils eine Anzahl von 2², 2⁴ oder 2⁶ Sensorelementen zur Erhöhung der Empfindlichkeit und/oder der erzielbaren Messfrequenz zu einem einzigen effektiven Sensorelement zusammenschaltbar sind.

In einer wirtschaftlich besonders vorteilhaften Ausführungsform sind die Sensorelemente vorzugsweise durch lichtempfindliche ladungsgekoppelte Metalloxid-Halbleiterbauelemete gebildet. Hieraus lässt sich eine besonders kompakte Sensormatrix aufbauen, die mit herkömmlicher elektronischer Beschaltung leicht auslesbar ist.

Für eine besonders wirtschaftliche Ausgestaltung der Erfindung zur Verwendung mit praktisch allen bekannten Flugplatz-Bodenfeuern, für die nach ICAO Annex 14 bestimmte Betriebswerte vorgeschrieben sind, ist es vorteilhaft, wenn die Sensorelemente der Messeinrichtung in Form einer Matrix angeordnet sind, die ein Breiten/Höhen-Verhältnis von wenigstens 1:1, vorzugsweise zwischen etwa 2:1 und 4:1, besonders bevorzugt nicht mehr als etwa 5:1 aufweist.

Für einen einfachen und robusten Aufbau ist es zweckmäßig, wenn die Sensorelemente-Matrix der Messeinrichtung möglichst klein ist, insbesondere sich über eine Fläche von nicht mehr als 100 cm² erstreckt.

Eine besonders kompakte und einfach zur realisierende Bauform lässt sich erhalten, wenn die Messeinrichtung ferner eine Abbildungsoptik umfasst, die vorzugsweise einen Bildwinkel von 50° bis 120°, insbesondere um etwa 90° horizontal und 70° vertikal, aufweist und weiter vorzugsweise hinsichtlich ihrer Abbildungseigenschaften auf einen Objektabstand von 200 mm bis 500 mm optimiert ist.

Zur Erzielung eines möglichst scharfen Abbildung des Lichtkegels eines Feuers ist es zweckmäßig, wenn die Streuscheibe als Mattscheibe, Überfangstreuscheibe, oder oberflächenmattierte Projektionsscheibe ausgebildet ist.

Für eine hohe Abbildungsqualität und gute Resistenz gegen Reste von Auftaumittel auf Alkoholbasis ist es günstig, wenn die Streuscheibe im wesentlichen aus einem Mineralglas besteht. Für geringes Gewicht, weitgehende Bruchfestigkeit und einfache Bearbeitbarkeit ist es vorteilhaft, wenn die Streuscheibe aus einem Kunststoff, wie Acrylglas, Polycarbonat, Celluloseacetat oder PMMA besteht, und materialunabhängig vorzugsweise in wenigstens einer Ebene annähernd rechtwinklig zu der Längsachse der Vorrichtung ausgerichtet ist.

Für eine Überprüfung der Leuchtmittel und Lichtsignale auf korrekte Farbwiedergabe ist es ferner zweckmäßig, z.B. im Bereich der Oberkante der Streuscheibe noch zusätzliche lichtempfindliche Sensoren vorzusehen, die mit Farbfiltern versehen, beispielsweise eine RGB-Farbanalyse des Lichts ermöglichen.

Zur Erzielung einer hohen Messgenauigkeit bei kurzen Messabständen ist es vorteilhaft, wenn die Vorrichtung ferner ein durch ein oder mehrere Impulssignale (W1) ansteuerbares Präzisionswegmesssystem umfasst, das zweckmäßig wenigstens ein Reibrad umfasst, das auch ein Laufrad sein kann, sowie einen mit dem Reibrad vorzugsweise schlupffrei gekoppelten Drehimpulsgeber enthält.

Um die Aufaddition von Streckenmessfehlern über eine Vielzahl von Feuerpositionen oder durch Ungenauigkeiten beim Einbau der Feuer zu vermeiden, ist es vorteilhaft, wenn die Vorrichtung ferner wenigstens einen Näherungssensor umfasst, der geeignet ist, das Überfahren eines Unterflurfeuers zu erfassen. Dadurch kann der Abstand zum Durchführen einer Messung bei jedem Feuer getrennt bestimmt werden, und es können sich nicht Mess- und Einbaufehler über die ganze Länge z.B. einer Startbahn von bis zu 4 km Länge aufsummieren, wodurch bereits nach einem Teil der Landebahn die Messungen unbrauchbar ungenau werden können.

Für eine Überprüfung auf Einhalten der Sollposition für die Messung auf etwaigen Seitenversatz ist es vorteilhaft, wenn die Vorrichtung mehrere Näherungssensoren, vorzugsweise drei bis neun Näherungssensoren umfasst, die in wenigstens einer Ebene im wesentlichen rechtwinklig zur Längsachse und vorzugsweise in einer Reihe und mit annähernd gleichem Abstand voneinander angeordnet sind.

Praktisch gut realisieren lässt sich die Erfindung, wenn die Vorrichtung ein oder mehrere induktive oder kapazitive Näherungsschalter als Näherungssensoren umfasst, da sie einen relativ großen Tastabstand zulassen. Für den Einsatz der erfindungsgemäßen Vorrichtung mit einem größeren und/oder nicht genau eingehaltenen Abstand, z.B. bei der Messung von Überflurfeuern, kann es auch zweckmäßig sein, wenn die Vorrichtung einen oder mehrere optoelektronische Sensoren als Näherungssensoren umfasst.

Hierzu ist es besonders vorteilhaft, wenn die Vorrichtung ferner eine Steuerungseinrichtung umfasst, die mit dem einen oder mehreren Näherungssensoren verbunden ist, sowie dem Präzisionswegmesssystem und optional einem manuellen Taster, zur Generierung eines Triggersignals (M) zur Auslösung des Einlesens von Signalen von den Sensorelementen der Messeinrichtung.

Ein Taster zur manuellen Auslösung zur Durchführung einer Messung ermöglicht zudem, die Vorrichtung unverändert (aber zweckmäßig ohne Laufräder und Deichseleinrichtung) auch zur Vermessung nicht eingebauter Feuer, z.B. in einer Werkstatt, zu verwenden. Zur Einstellung des erforderlichen Abstands zur Streuscheibe kann eine angepasste Lehre verwendet werden.

Für eine genaue Kurshaltung zu Erzielung einer möglichst mittigen Erfassung des zu überprüfenden Feuers ist es zweckmäßig, wenn die Vorrichtung ferner eine im Sichtbereich des Bedieners/Fahrers anbringbare im wesentlichen horizontale Balkenanzeige aufweist, wobei die Balkenanzeige eine vorzugsweise ungerade Anzahl von Anzeigeelementen umfasst. Dabei ist es besonders benutzerfreundlich, wenn bei der Balkenanzeige jedem Anzeigeelement, ausgenommen den beiden äußeren, ein Näherungssensor zugeordnet ist und das ferner eine Halteschaltung vorgesehen ist, die ein von einem Näherungssensor abgegebenes Impulssignal für einen vorbestimmten Zeitraum, vorzugsweise im Bereich von etwa 0,1 bis 0,3 s, in ein Ansteuerungssignal für ein Anzeigelement umsetzt.

Zur Unterstützung einer genauen Kurshaltung zu Erzielung einer möglichst mittigen Erfassung des zu überprüfenden Feuers ist es weiter zweckmäßig, wenn die Vorrichtung ferner eine Empfangsantenne und ein Empfangsgerät für einen Landekurssender (Localizer, "LLZ") mit einem üblichen aeronautischen Anzeigegerät im Sichtbereich des Bedieners/Fahrers umfasst. Solche LLZ-Sender sind auf Flughäfen mit Instrumentenlandesystem am Ende der Landebahnen installiert. Durch die ergänzende Verwendung einer solchen Einrichtung wird der Fahrer besonders unterstützt, da gerade gegen Ende der Feuerreihe, wo naturgemäß die visuelle Kursführung durch die folgenden Feuer schlechter wird, die Empfindlichkeit des LLZ-Systems zunimmt und den Fahrer zunehmend genau führen kann.

In einer besonders vorteilhaften Ausführungsform ist die Vorrichtung als Fahrzeuganhänger ausgebildet, wobei der Fahrzeuganhänger zwei abnehmbare Laufräder sowie eine vorzugsweise ebenfalls abnehmbare Deichseleinrichtung zur Verbindung mit einem Zugfahrzeug umfasst. Dadurch lässt sich die Vorrichtung einerseits einfach hinter einem beliebigen Fahrzeug mit einer Anhängerkupplung einsetzen, insbesondere handelsüblichen PKW. Ferner lässt sich die Vorrichtung für die Anfahrt beim Einsatz an verschiedenen Orten insbesondere bei schlechtem Wetter leicht in einem Fahrzeug, auch einem handelsüblichen PKW-Kombi, verstauen.

Für eine besonders einfache und genaue Kurshaltung zur mittigen Erfassung von Unterflurfeuern ist eine abgewinkelte Deichseleinrichtung mit einer zu der Längsmittelachse der Vorrichtung seitlich versetzten Anordnung zur unsymmetrischen Ankopplung der Vorrichtung an eine Anhängerkupplung eines Zugfahrzeuges vorteilhaft. So kann die Längsmittelachse der Vorrichtung in die Flucht eines Fahrersitzplatzes des Zugfahrzeugs gebracht werden, wodurch ein parallaxefreies Ansteuern der Feuer möglich ist.

Ein verbessertes Intensitätsverhältnis von zu überprüfendem Feuer zu Nachbarfeuern oder anderen Störlichtquellen (Nutzsignal zu Störsignal) kann erhalten werden, wenn das Gehäuse an wenigstens einer, vorzugsweise drei Seiten der Streuscheibe über diese zur Abschirmung gegen Streulicht hinausragt. Für den Tageslichteinsatz ist es dabei weiter vorteilhaft, wenn eine Gehäuseverlängerung zur Bildung eines im wesentlichen nur nach unten offenen vor Streulicht weitgehend geschützten Raumes von vorzugsweise wenigstens 1,5 m Länge vorgesehen ist. Dadurch lässt sich speziell für Unterflurfeuer eine weitgehend störlichtunempfindliche Messkammer bilden.

Zur Verifikation einer Position eines defekten Feuers oder außerhalb eines Flugplatzgeländes oder zur Beschränkung des geografischen Nutzungsbereiches einer erfindungsgemäßen Vorrichtung kann es vorteilhaft sein, wenn die Vorrichtung ferner ein zur Bestimmung einer geografischen Absolutposition geeignetes Ortsbestimmungsmodul umfasst, insbesondere, wenn das Ortsbestimmungsmodul eine Empfangs- und Auswerteeinrichtung für wenigstens ein Satellitennavigationssystem, wie GPS (Global Positioning System), Differential-GPS oder GALILE0 (Europäisches Satellitennavigationssystem), und/oder ein terrestrisches Positionsbestimmungssystem, wie DECCA (Funksendergestützt), umfasst.

Durch das erfindungsgemäße Verfahren ist es erstmals möglich, die Intensität beispielsweise von Unterflurfeuern auf Landebahnen aus geringer Entfernung zu messen und dabei einen weiten Abstrahlwinkelbereich zu erfassen. Dadurch ist beispielsweise bei Landebahnfeuern anders als bei bisher bekannten Systemen eine Beurteilung der Einhaltung von Sollwerten der Lichtabgabe auch außerhalb des sogenannten Main Beams möglich, so dass auch eine vorschriftsmäßige Sichtbarkeit des Feuers auch von seitlich oder ober-/unterhalb der optischen Achse überprüft werden kann.

Durch den kurzen Messabstand kann eine höhere Genauigkeit und Zuverlässigkeit erzielt werden, da die atmosphärische Sichtweite, die durch Umwelteinflüsse beeinflusst wird, wie Staub oder Dunst, einen gegenüber den bekannten Systemen wesentlich geringeren, wenn nicht vernachlässigbaren Einfluss auf die Genauigkeit der Messung hat. Auch haben andere Lichtquellen, insbesondere benachbarte Feuer, keinen oder nur geringen Einfluss auf die Messung, da durch den kurzen Messabstand das Intensitätsverhältnis von zu überprüfendem Feuer zu Nachbarfeuern (Nutzsignal zu Störsignal) um mehrere Größenordnungen größer ist, als bei der Verwendung der bekannten Systeme und Verfahren, insbesondere, wenn der Abstand etwa 1 m bis 3 m beträgt, vorzugsweise nicht mehr als 2 m, insbesondere etwa 1,5 m.

Zur Erzielung einer hohen Messgenauigkeit bei kurzen Messabständen ist es vorteilhaft, dass das Triggersignal (M) generiert wird, wenn ab der Erfassung eines Impulssignals (W1) eines Näherungssensors, mit dem beispielsweise ein Überfahren eines Unterflurfeuers angezeigt wird, oder einer vorgegebenen Anzahl von Impulssignalen (W1), ein vorbestimmtes Wegsignal das Zurücklegen eines vorbestimmten Weges seit dem Impulssignal (W1) erfasst wird, insbesondere, wenn die Wegmessung durch die Erfassung eines Impulssignals (W1) eines Näherungssensors, mit dem beispielsweise ein Überfahren eines Unterflurfeuers angezeigt wird, wahlweise neu gestartet wird, auch wenn bei der vorherigen Messung das vorbestimmte Wegsignal für das Zurücklegen eines vorbestimmten Weges seit dem Impulssignal (W1) noch nicht erfasst worden ist. Dadurch wird es einfach möglich, auch bei Doppelfeuer-Installationen, wie bei Unterflur-Pistenrandfeuern bestehend aus einem Rundumfeuer und einem separaten gerichteten Feuer, genaue Messungen zu erhalten.

Dadurch wird der Abstand zum Durchführen einer Messung bei jedem Feuer getrennt bestimmt, und es können sich nicht Mess- und Einbaufehler über die ganze Länge z.B. einer Startbahn von bis zu 4 km Länge aufsummieren, wodurch bereits nach einem Teil der Landebahn die Messungen unbrauchbar ungenau werden können.

Zweckmäßig erfolgt die Messung dergestalt, dass das Wegsignal aus einer vorbestimmten Anzahl von Drehimpulsen besteht.

In einer besonders vorteilhaften Ausführungsform der Erfindung ist das Verfahren und/oder die Vorrichtung gekennzeichnet durch eine zugeordnete Signalisierung, wenn bei weniger als einem vorbestimmten Prozentsatz P einer Anzahl von Feuern einer Messreihe weniger als ein voreinstellbarer Wert (I) oder ein voreingestellter Prozentsatz eines vorgegebenen Sollwertes der Lichtintensität erfasst ist.

Dadurch könne nicht nur nicht mehr ordnungsgemäß arbeitende Einzelfeuer protokolliert werden, sondern es kann eine automatische Überprüfung des Feuersystems durchgeführt und das Ergebnis ausgegeben werden, da hierfür nicht nur der Zustand eines Einzelfeuers maßgebend ist, sondern auch der Anteil und die Verteilung nicht mehr ordnungsgemäß arbeitender Feuer. Durch das Verfahren wird so eine fehleranfällige manuelle nachträgliche Auswertung vermieden.

Dies gilt insbesondere, wenn das Verfahren und/oder die Vorrichtung gekennzeichnet ist durch eine zugeordnete Signalisierung, wenn bei weniger als einer vorbestimmten Anzahl von benachbarten Feuern weniger als ein voreinstellbarer Wert (I) oder ein voreingestellter Prozentsatz eines vorgegebenen Sollwertes der Lichtintensität erfasst ist.

Zur Vermeidung von Fehlauswertungen von Messungen durch mäßige Abweichung der abgefahrenen Strecke bezogen auf die Längsmittelachse der Vorrichtung ist es zweckmäßig, wenn eine Erfassung der Lage eines passierten Feuers bezüglich einer Längsmittelachse der Vorrichtung und Ausgabe eines der erfassten Lage zugeordneten visuellen und/oder Audiosignals vorgesehen ist, insbesondere durch eine im Sichtbereich des Bedieners/Fahrers angeordnete im wesentlichen horizontale Balkenanzeige.

Für eine über die messtechnische Auswertung hinaus gehende Analyse der Feuer ist es vorteilhaft, wenn die erfassten Intensitätswerte eines Feuers in ein farbiges Bild umgesetzt werden, bei dem Intensitätswertebereiche einer Farbe oder einem Farbwertebereich zugeordnet werden, so dass ein farbiges Bild der erfassten Intensitätsverteilung erhalten wird. Daraus kann ein erfahrener Fachmann auf dem Gebiet der Flugfeuer weitere Schlüsse ziehen, zum Beispiel ein gesprungenes Prisma eines Unterflurfeuers erkennen, bevor das Feuer ausfällt oder z.B. durch Feuchtigkeitseintritt unbrauchbar wird.

Es kann darüber hinaus vorteilhaft sein, wenn zum Erhalt vergleichbarer Messergebnisse bei Tagmessung oder bei hoher Allgemeinbeleuchtung in der Umgebung vor einer Messreihe eine Messung manuell ausgelöst wird und das so erhaltene Messergebnis als Offset von den Messergebnissen der nachfolgenden Messreihe abgezogen wird.

Zur Überprüfung der gesamten Vorgaben für die Mindestlichtstärken eines Feuers auch unter seitlichen Winkeln ist es vorteilhaft, wenn für die Auswertung der Messungen aus der Gesamtheit der lichtempfindlichen Sensorelemente ein oder mehrere vorbestimmte Bereiche ausgewählt werden und für jeden Bereich gesondert eine durchschnittliche Lichtintensität ermittelt wird und ein Vergleich der gemessenen durchschnittlichen Lichtintensität mit einem voreingestellten Sollwert vorgenommen wird.

Zur Kompensation von Fahrfehlern ist es zweckmäßig, wenn ein Überfahren eines Feuers außermittig bezogen auf die Längsmittelachse quantitativ erfasst wird und die Lage des oder der vorbestimmten Bereiche aus der Matrix der Sensorelemente entsprechend der erfassten Abweichung kompensiert wird.

Insbesondere zur Beschränkung des geografischen Nutzungsbereiches einer erfindungsgemäßen Vorrichtung und des erfindungsgemäßen Verfahrens kann eine geografische Ortslage ermittelt und die so erhaltenen Koordinaten mit einem voreingestellten Koordinatenbereich verglichen werden, so dass eine Fehlermeldung ausgegeben wird, wenn die ermittelten Koordinaten außerhalb des voreingestellten Koordinatenbereiches liegen oder keine Koordinaten ermittelt wurden. Dadurch ist es möglich, einen Einsatz der Vorrichtung z.B. unter nicht spezifizierten Klimabedingungen und dadurch möglicherweise verursachte Fehlauswertungen zu vermeiden. Weiterhin kann so eine nicht autorisierte Verwendung des Verfahrens durch Beschaffen von Raubkopien einer das Verfahren verkörpernden Software unterbunden werden.

Schließlich kann diese Funktion auch als Schutz des rechtmäßigen Besitzers und Benutzers vor Diebstahl oder Unterschlagung einer erfindungsgemäßen Vorrichtung und/oder einer das Verfahren verkörpernden Software dienen.

Die Erfindung soll im folgenden anhand eines in den Zeichnungen dargestellten Ausführungsbeispiels näher erläutert werden. Es zeigen:
- Fig. 1: eine stilisierte Darstellung einer erfindungsgemäßen Ausgestaltung der Vorrichtung in Form eines Fahrzeuganhängers;
- Fig. 2: den Fahrzeuganhänger aus Fig. 1 in einer Ansicht von hinten;
- Fig. 3: den Fahrzeuganhänger aus Fig. 1 in einer Ansicht von vorn;
- Fig. 4: eine Schnittdarstellung eines erfindungsgemäßen Fahrzeuganhängers aus Fig. 1:
- Fig. 5: einen Ablaufplan für die Triggerung des Auslesens der lichtempfindlichen Sensoren eines erfindungsgemäßen Verfahrens für eine erfindungsgemäße Vorrichtung:
- Fig. 6: eine schematisierte vergrößerte Darstellung der Messeinrichtung und Streuscheibe einer erfindungsgemäßen Vorrichtung;
- Fig. 7: eine Balkenanzeige für die erfindungsgemäße Vorrichtung; und
- Fig. 8: eine alternative Ausführungsform einer erfindungsgemäßen Vorrichtung zur Überprüfung von Überflurfeuern.

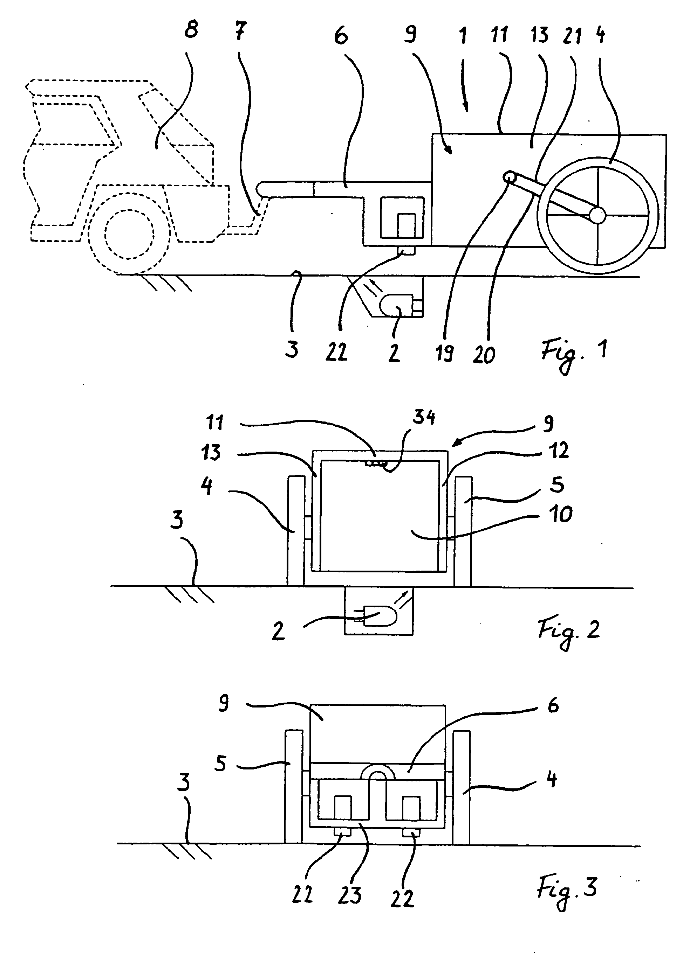

Figur 1 zeigt eine erfindungsgemäße Vorrichtung der eingangs erwähnten Art, in Form eines Fahrzeuganhängers 1, wie sie zur Überprüfung von Unterflurfeuern 2 auf Landebahnen 3 geeignet ist.

In der dargestellten besonders vorteilhaften Ausführungsform weist der Fahrzeuganhänger 1 zwei abnehmbare Laufräder 4 und 5 (Fig. 2) sowie eine vorzugsweise ebenfalls abnehmbare Deichseleinrichtung 6 zur Verbindung mit einer (in Fig. 1 nur angedeuteten ) Anhängerzugvorrichtung 7 eines ebenfalls nur angedeuteten Zugfahrzeugs 8 umfasst. Dadurch lässt sich die Vorrichtung einfach hinter einem beliebigen Fahrzeug mit einer Anhängerkupplung 7 einsetzen, insbesondere handelsüblichen PKW.

Durch Abnehmen der Laufräder 4 und 5 und der Deichseleinrichtung 6 lässt sich die Vorrichtung für die Anfahrt beim Einsatz an verschiedenen Orten insbesondere bei schlechtem Wetter leicht in einem Fahrzeug, insbesondere dem Zugfahrzeug in Form eines handelsüblichen PKW-Kombi 8, verstauen.

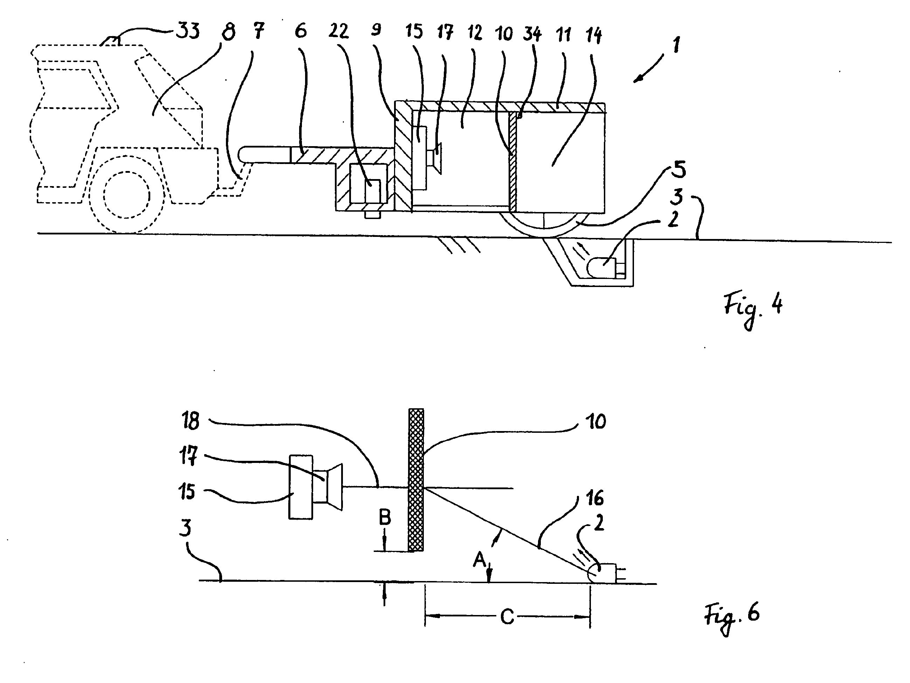

Der Anhänger 1 weist ein geschlossenes Gehäuse 9 auf, das an seiner in Fahrtrichtung gesehen Rückseite wenigstens teilweise durch eine Streuscheibe 10 abgeschlossen ist. Für ein verbessertes Intensitätsverhältnis von zu überprüfendem Feuer zu Nachbarfeuern oder anderen Störlichtquellen (Nutzsignal zu Störsignal) ist das Gehäuse 9 an drei Seiten, nämlich der Oberseite 11, der rechten 12 und linken 13 Gehäuseseite über die Streuscheibe 10 hinausragend ausgebildet. Für den Tageslichteinsatz ist es dabei weiter vorteilhaft, wenn eine nicht dargestellte Gehäuseverlängerung mit einer geschlossenen Rückwand zur Bildung eines im wesentlichen nur nach unten offenen vor Streulicht weitgehend geschützten Raumes von vorzugsweise wenigstens 1,5 m Länge vorgesehen ist. Dadurch lässt sich speziell für Unterflurfeuer 2 eine weitgehend störlichtunempfindliche Messkammer 14 (Fig. 4) bilden.

Eine Längsachse des Anhängers 1 definiert in wenigstens einer Ebene die Hauptmessrichtung, die bei typischen Anwendungen der Fahrtrichtung entspricht.

Figur 2 zeigt den Anhänger 1 von hinten. Dabei ist gut die Anordnung der Laufräder 4 und 5 zu erkennen sowie der Blick von hinten in den Gehäusekasten 9 auf die Streuscheibe 10.

Wie in der Schnittdarstellung des Anhängers 1 in Figur 4 insbesondere gut zu erkennen ist, befindet sich in dem Gehäuse 9 eine Messeinrichtung 15 mit einer Vielzahl von lichtempfindlichen und zur Messung von Lichtintensitäten geeigneten Sensorelementen, vorzugsweise angeordnet in Form einer Matrix, sowie als Rückwand des Gehäuses 9 die transluzente Streuscheibe 10. Dadurch ist die Streuscheibe 10 zwischen der Messeinrichtung 15 und einem zu überprüfenden Leuchtmittel, hier einem Unterflurfeuer 2, angeordnet.

Durch die erfindungsgemäße Ausbildung der Vorrichtung ist es erstmals möglich, die Intensität beispielsweise von Unterflurfeuern 2 auf Landebahnen 3 während der Vorbeifahrt aus geringer Entfernung zu messen und dabei einen weiten Abstrahlwinkelbereich A zu erfassen. Dadurch ist beispielsweise bei Landebahnfeuern 2, 24 anders als bei bisher bekannten Systemen eine Beurteilung der Einhaltung von Sollwerten der Lichtabgabe auch außerhalb des sogenannten Main Beams möglich, so dass auch eine vorschriftsmäßige Sichtbarkeit des Feuers von außerhalb der optischen Achse 16 des Feuers 2 überprüft werden kann.

Durch den kurzen Messabstand kann eine höhere Genauigkeit und Zuverlässigkeit erzielt werden, da die atmosphärische Sichtweite, die durch Umwelteinflüsse beeinflusst wird, wie Staub oder Dunst, eine gegenüber den bekannten Systemen wesentlich geringeren, wenn nicht vernachlässigbaren Einfluss auf die Genauigkeit der Messung hat. Auch haben andere Lichtquellen, insbesondere benachbarte Feuer, keinen oder nur geringen Einfluss auf die Messung, da durch den kurzen Messabstand das Intensitätsverhältnis von zu überprüfendem Feuer zu Nachbarfeuern (Nutzsignal zu Störsignal) um mehrere Größenordnungen größer (besser) ist, als bei der Verwendung der bekannten Systeme.

Weiterhin ist es erfindungsgemäß möglich, die Messeinrichtung 15 mit den lichtempfindlichen Sensorelementen mitsamt der dafür notwendigen Betriebeselektronik insbesondere witterungsgeschützt in dem Gehäuse 9 unterzubringen, auch ist eine Montage oder Ausrichtung vor einem Messeinsatz nicht erforderlich.

Für eine hohe Genauigkeit und Zuverlässigkeit des Messergebnisses einschließlich der z.B. nach ICAO-Annex 14 vorgeschriebenen Mittelwertbildung in genau umgrenzten Schichten des abgestrahlten Lichtkegels weist die Messeinrichtung 15 besonders vorteilhaft ca. 1.310.720 Sensorelemente auf.

Insbesondere für besonders hohe Messgeschwindigkeiten und/oder bei Feuern niedriger Nennlichtintensität können jeweils eine Anzahl von 2², 2⁴ oder 2⁶ Sensorelementen zur Erhöhung der Empfindlichkeit und/oder der erzielbaren Messfrequenz zu einem einzigen effektiven Sensorelement zusammengeschaltet werden, um die Lichtempfindlichkeit und die maximale Auslesefrequenz zu erhöhen.

Die Sensorelemente sind vorzugsweise durch lichtempfindliche ladungsgekoppelte Metalloxid-Halbleiterbauelemete gebildet. Hieraus lässt sich eine besonders kompakte Sensormatrix aufbauen, die mit herkömmlicher elektronischer Beschaltung mit üblichen niedrigen Betriebsspannungen leicht und schnell auslesbar ist. Die so erhaltenen Signale lassen sich mit herkömmlicher Standardelektronik besonders einfach weiterverarbeiten. Eine solche Sensorelemente-Matrix der Messeinrichtung 15 kann auf einer Fläche von weniger als 70 mm² angeordnet sein.

Für eine besonders wirtschaftliche Ausgestaltung der Erfindung zur Verwendung mit praktisch allen bekannten Flugplatz-Bodenfeuern 2, für die nach ICA0 Annex 14 bestimmte Betriebswerte vorgeschrieben sind, ist es vorteilhaft, wenn die Sensorelemente der Messeinrichtung 15 in Form einer Matrix angeordnet sind, die ein Breiten/Höhen-Verhältnis von wenigstens 1:1, vorzugsweise zwischen etwa 2:1 und 4:1, besonders bevorzugt nicht mehr als etwa 5:1 aufweist.

Eine besonders kompakte und einfach zur realisierende Bauform lässt sich erhalten, wenn die Messeinrichtung 15 ferner eine Abbildungsoptik 17 umfasst, die vorzugsweise einen Bildwinkel von 50° bis 120°, insbesondere um etwa 90° horizontal und 70° vertikal, aufweist und weiter vorzugsweise hinsichtlich ihrer Abbildungseigenschaften auf einen Objektabstand von 200 mm bis 500 mm optimiert ist.

Zur Erzielung einer möglichst scharfen Abbildung des Lichtkegels eines Feuers 2 ist es zweckmäßig, wenn die Streuscheibe 10 als Mattscheibe, Überfangstreuscheibe, oder oberflächenmattierte Projektionsscheibe ausgebildet ist. Die optische Achse 18 der Abbildungsoptik 17 und die Streuscheibe 10 sollten zur Vermeidung von Unschärfen bei großer Öffnung der Abbildungsoptik 17 möglichst rechtwinklig zueinander angeordnet sein. Der von der Vorrichtung nicht erfassbare Teil des Winkelbereichs A über der Landebahn 3 ergibt sich, wie in Fig. 6 gezeigt, aus dem Abstand B der Unterkante der Streuscheibe 10 über der Landebahn 3 und dem Messabstand C zwischen Feuer 2 und Streuscheibe 10 zu arc tan B/C.

Für eine hohe Abbildungsqualität und gute Resistenz gegen Reste von Auftaumittel auf Alkoholbasis ist es günstig, wenn die Streuscheibe 10 im wesentlichen aus einem Mineralglas besteht. Für geringes Gewicht, weitgehende Bruchfestigkeit und einfache Bearbeitbarkeit ist es jedoch vorteilhaft, wenn die Streuscheibe 10 aus einem Kunststoff, wie Acrylglas, Polycarbonat, Celluloseacetat oder PMMA besteht. Die Streuscheibe 10 ist annähernd rechtwinklig zu der Längsachse des Anhängers 1 und in der Betriebslage des Anhängers 1 vorzugsweise vertikal ausgerichtet. Eine vertikale Ausrichtung hat den Vorteil, dass der abgebildete Schnitt durch den Lichtkegel den vorgegebenen Isocandela-Kurven der ICAO entspricht.

Zur Überprüfung von Leuchtmitteln und Lichtsignalen, wie einer Landebahnmittellinienbefeuerung bestehend aus mehreren hintereinander entlang einer Linie in einem bestimmten Abstand voneinander angeordneten in die Landebahnoberfläche 3 eingelassenen Unterflurfeuern 2, wird dabei in einem geringen Abstand C von dem Feuer 2 die Streuscheibe 10 positioniert. Dies erfolgt sinnvoll dynamisch, das heißt, man fährt mit dem Anhänger 1 möglichst mittig über die Feuerreihe, so dass das oder die zu überprüfenden Feuer 2 von hinten in den Anhänger 1 und damit auf die Streuscheibe 10 leuchten. So entsteht auf der Streuscheibe 10 ein Bild eines Lichtkegelschnittes des Leuchtmittels oder Feuers 2. Dieses Bild wird auf der gehäuseinneren Seite der Streuscheibe 10 durch die oben erwähnte Abbildungsoptik 17 auf die Anordnung von lichtempfindlichen Sensorelementen der Messeinrichtung 10 abgebildet.

Dadurch ist es möglich, die Intensität beispielsweise von Unterflurfeuern 2 auf Landebahnen 3 aus geringer Entfernung zu messen und dabei einen weiten Abstrahlwinkelbereich zu erfassen. Dadurch ist beispielsweise bei Landebahnfeuern anders als bei bisher bekannten Systemen eine Beurteilung der Einhaltung von Sollwerten der Lichtabgabe auch außerhalb des sogenannten Main Beams möglich, so dass auch eine vorschriftsmäßige Sichtbarkeit des Feuers auch außerhalb der optischen Achse 16 überprüft werden kann.

Für eine Überprüfung der Feuer 2, 24 auf korrekte Farbwiedergabe ist es ferner zweckmäßig, z.B. im Bereich der Oberkante der Streuscheibe 10 noch zusätzliche lichtempfindliche Sensoren 34 vorzusehen, die mit Farbfiltern versehen, beispielsweise eine RGB-Farbanalyse des Lichts ermöglichen.

Zur Erzielung einer hohen Messgenauigkeit bei kurzen Messabständen C ist es vorteilhaft, wenn die Vorrichtung ferner ein durch ein oder mehrere Impulssignale (W1) ansteuerbares Präzisionswegmesssystem umfasst, das zweckmäßig wenigstens ein Reibrad umfasst, das hier zugleich durch das Laufrad 4 gebildet ist. Das Reib- bzw. Laufrad 4 ist schlupffrei mit einem Drehimpulsgeber 19 vorzugsweise über eine Rollenkette 20, z.B. eine übliche Fahrradkette, gekoppelt. Für einen gleichmäßigen Kettenlauf und damit gleichmäßige Übertragung der Drehung des Laufrades 4 auf den Drehimpulsgeber 19 ist insbesondere bei gefederter Aufhängung der Laufräder 4 und 5 die Verwendung eines Kettenspanners zweckmäßig im Leertrum 21 der Kette vorteilhaft. Als Drehimpulsgeber 19 kann beispielsweise ein herkömmlicher Inkrementalgeber mit 200-1000 Impulsen pro Umdrehung eingesetzt werden. Bei Verwendung von Laufrädern 4 und 5 im Mountainbike-Format der Nenngröße 26" bzw. 559 mm ergibt sich dabei eine zweckmäßige Auflösung von 2 mm Wegstrecke pro Impuls.

Gegenüber den bekannten Systemen wird hier mit einem wesentlich geringeren Abstand C von etwa 1 m bis 3 m, vorzugsweise nicht mehr als 2 m, insbesondere etwa 1,5 m, gearbeitet. Durch den kurzen Messabstand kann eine höhere Genauigkeit und Zuverlässigkeit erzielt werden, da die atmosphärische Sichtweite, die durch Umwelteinflüsse beeinflusst wird, wie Staub oder Dunst, einen geringen, wenn nicht vernachlässigbaren, Einfluss auf die Genauigkeit der Messung hat. Auch haben andere Lichtquellen, insbesondere benachbarte Feuer, keinen oder nur geringen Einfluss auf die Messung, da durch den kurzen Messabstand das Intensitätsverhältnis von zu überprüfendem Feuer zu Nachbarfeuern (Nutzsignal zu Störsignal) um mehrere Größenordnungen größer ist, als bei der Verwendung der bekannten Systeme und Verfahren.

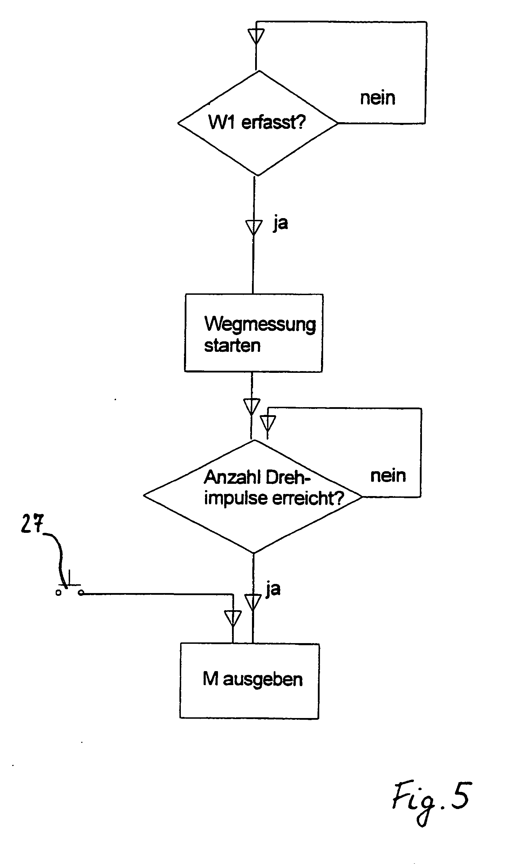

Zur Erzielung einer hohen Messgenauigkeit bei kurzen Messabständen ist es vorteilhaft, dass das Triggersignal M generiert wird, wenn ab der Erfassung eines Impulssignals W1 eines Näherungssensors 22, mit dem beispielsweise ein Überfahren eines Unterflurfeuers 2 angezeigt wird, oder einer vorgegebenen Anzahl von Impulssignalen W1, ein vorbestimmtes Wegsignal das Zurücklegen eines vorbestimmten Weges seit dem Impulssignal W1 erfasst wird (siehe Fig. 5), insbesondere, wenn die Wegmessung durch die Erfassung eines Impulssignals W1 eines Näherungssensors 22, mit dem beispielsweise ein Überfahren eines Unterflurfeuers 2 angezeigt wird, wahlweise neu gestartet wird, auch wenn bei der vorherigen Messung das vorbestimmte Wegsignal für das Zurücklegen eines vorbestimmten Weges seit dem Impulssignal W1 noch nicht erfasst worden ist. Dadurch wird es einfach möglich, auch bei Doppelfeuer-Installationen, wie bei Unterflur-Pistenrandfeuern bestehend aus einem Rundumfeuer und einem in Fahrtrichtung folgenden separaten gerichteten Feuer, genaue Messungen zu erhalten.

Zweckmäßig erfolgt die Messung dergestalt, dass das Wegsignal aus einer vorbestimmten Anzahl von Drehimpulsen besteht, bei dem hier beschriebenen Ausführungsbeispiel aus 750 Impulsen des Drehimpulsgebers 19 für eine Strecke C von 1,5 m ab dem erfassten Unterflurfeuer 2.

Dadurch wird der Abstand zum Durchführen einer Messung bei jedem Feuer getrennt bestimmt, und es können sich nicht Mess- und Einbaufehler über die ganze Länge z.B. einer Startbahn von bis zu 4 km Länge aufsummieren, wodurch bereits nach einem Teil der Landebahn die Messungen unbrauchbar ungenau werden können.

Um die beschriebene Aufaddition von Streckenmessfehlern über eine Vielzahl von Feuerpositionen oder durch Ungenauigkeiten beim Einbau der Feuer 2 zu vermeiden und um leichte Kursabweichungen bei der Messung für die Auswertung hinsichtlich der Lage kompensieren zu können, sind mehrere Näherungssensoren 22 vorgesehen, um ein Überfahren eines Unterflurfeuers 2 zu erfassen. Für eine Überprüfung auf Einhalten der Sollposition für die Messung auf etwaigen Seitenversatz ist es vorteilhaft, wenn die Vorrichtung mehrere Näherungssensoren 22, vorzugsweise drei bis neun Näherungssensoren 22 umfasst, die in wenigstens einer Ebene im wesentlichen rechtwinklig zur Längsachse und vorzugsweise in einer Reihe an dem Anhänger 1 vor dem Gehäuse 9 und mit annähernd gleichem Abstand voneinander angeordnet sind, beispielsweise an einer Quertraverse 23 der Deichseleinrichtung 6 (Fig. 3).

Der Übersichtlichkeit halber sind in den Figuren nur zwei solcher Näherungssensoren 22 dargestellt. Als Näherungssensoren 22 eignen sich induktive oder kapazitive Näherungsschalter, da sie einen relativ großen Tastabstand zulassen. Ein Beispiel eines geeigneten induktiven Näherungsschalters 22 ist unter der Bezeichnung Uprox® Ni75U-CP80-AP6X2 von der Fa. Turck erhältlich.

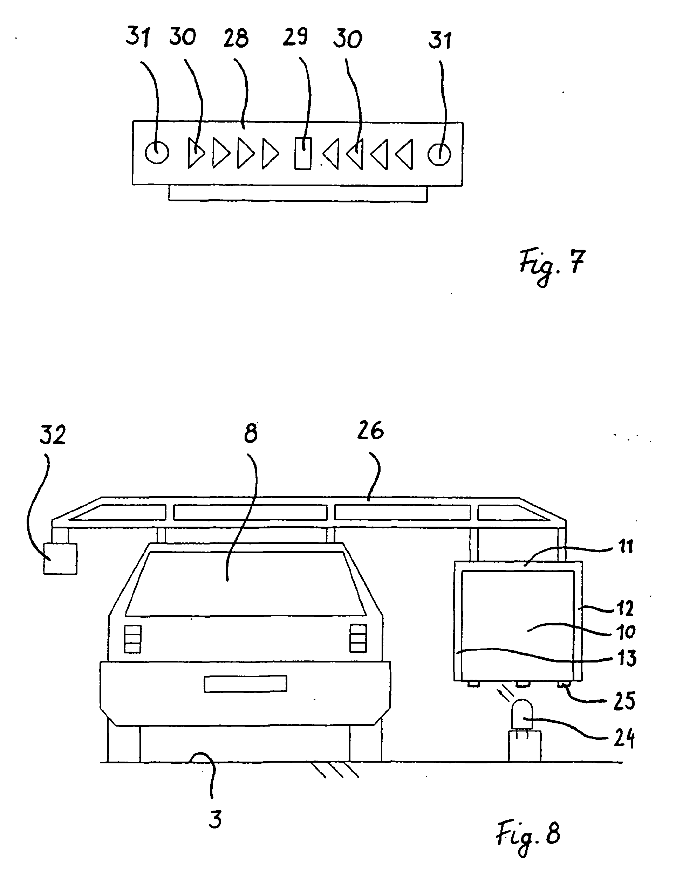

Für den Einsatz der erfindungsgemäßen Vorrichtung mit einem größeren und/oder nicht genau eingehaltenen Abstand, z.B. bei der Messung von Überflurfeuern 24, kann es auch zweckmäßig sein, wenn die Vorrichtung einen oder mehrere optoelektronische Sensoren 25 als Näherungssensoren umfasst. Für die Messung von Überflurfeuern 24, die in der Regel etwa 0,5 m aus dem Boden herausragen, wird das Anhängergehäuse 9 ohne Deichsel 6 und Laufräder 4 und 5 z.B. an einem geeigneten Dachträger 26 in einer der Überflurfeuertype 24 entsprechenden Höhe an einem PKW 8 montiert (Fig. 8). An dem gegenüberliegenden Ende des Dachträgers 26 kann ein geeignetes Gegengewicht 32 angebracht sein, insbesondere, wenn wegen der Ausnutzung der Toleranzen die Feuer 24 in einigem Abstand vom Rand der asphaltierten Piste 3 aufgebaut sind. Zur Erzeugung des Wegsignals wird anstelle der oben beschriebenen Wegmesseinrichtung eine solche mit einem externen an dem Fahrzeug angebrachten Messrad (nicht dargestellt) verwendet, z.B. einem sogenanntes Peiseler-Messrad.

Hierzu ist es besonders vorteilhaft, wenn die Vorrichtung ferner eine vorteilhaft in die Messeinrichtung 15 integrierte Steuerungseinrichtung umfasst, die mit dem einen oder mehreren Näherungssensoren 22, 25 verbunden ist, sowie dem Präzisionswegmesssystem und optional einem manuellen Taster 27 zur Generierung eines Triggersignals M zur Auslösung des Einlesens von Signalen von den Sensorelementen der Messeinrichtung 15.

Ein Taster 27 zur manuellen Auslösung zur Durchführung einer Messung ermöglicht zudem, die Vorrichtung unverändert (aber zweckmäßig ebenfalls ohne Laufräder und Deichseleinrichtung) auch zur Vermessung nicht eingebauter Feuer, z.B. in einer Werkstatt, zu verwenden (vgl. Fig. 5). Die Wegmesseinrichtung wird dabei nicht benötigt. Zur Einstellung des erforderlichen Abstands des Feuers zur Streuscheibe 10 kann eine angepasste Lehre verwendet werden.

Für eine genaue Kurshaltung zu Erzielung einer möglichst mittigen Erfassung des zu überprüfenden Feuers 2, 24 ist es zweckmäßig, wenn die Vorrichtung ferner eine im Sichtbereich des Bedieners/Fahrers anbringbare im wesentlichen horizontale Balkenanzeige 28 aufweist, wobei die Balkenanzeige 28 eine vorzugsweise ungerade Anzahl von Anzeigeelementen umfasst. Die Balkenanzeige 28 kann dabei so ausgestaltet sein, dass sie an einem Scheibenwischerarm oder auf dem Armaturenbrett eines Fahrzeugs 8 vorzugsweise über den Instrumenten angebracht werden kann. Dabei ist es besonders benutzerfreundlich, wenn bei der Balkenanzeige je einem Anzeigeelement, ausgenommen den beiden äußeren, ein Näherungssensor 22, 25 zugeordnet ist und das ferner eine Halteschaltung vorgesehen ist, die ein von einem Näherungssensor abgegebenes Impulssignal für einen vorbestimmten Zeitraum, vorzugsweise etwa 0,1 bis 0,3 s, in ein Ansteuerungssignal für ein Anzeigelement umsetzt, so dass das Signal für diesen Zeitraum sichtbar bleibt. In Fig. 7 ist eine beispielsweise Balkenanzeige 28 dargestellt für die Anzeige von Informationen von neun Näherungssensoren 22. Die Balkenanzeige 28 umfasst hier insgesamt 11 Anzeigeelemente. Dabei kann die mittlere Anzeige 29 als rechteckige grüne LED zur Anzeige des mittigen Passierens eines Feuers 2, 24, jeweils rechts und links daneben je 4 gelbe LED 30 in Dreieckform zum außermittigen Passieren des Feuers 2, 24 dienen. Die äußeren Anzeigen, z.B. in Form einer runden rotleuchtenden LED 31, dienen dabei zur visuellen Orientierung der Fahrersund als Zielhilfe zur Ansteuerung der Feuer 2, 24.

Zur Unterstützung einer genauen Kurshaltung zu Erzielung einer möglichst mittigen Erfassung des zu überprüfenden Feuers 2, 24 ist es weiter zweckmäßig, wenn die Vorrichtung ferner eine Empfangsantenne 33 und ein Empfangsgerät für einen Landekurssender (Localizer, "LLZ") mit einem üblichen aeronautischen Anzeigegerät im Sichtbereich des Bedieners/Fahrers umfasst. Solche LLZ-Sender sind auf Flughäfen mit Instrumentenlandesystem am Ende der Landebahnen installiert. Durch die ergänzende Verwendung einer solchen Einrichtung wird der Fahrer besonders unterstützt, da gerade gegen Ende der Feuerreihe, wo naturgemäß die visuelle Kursführung durch die folgenden Unterflurfeuer 2 schlechter wird, die Empfindlichkeit des LLZ-Systems zunimmt und den Fahrer zunehmend genau führen kann. Dazu ist besonders zweckmäßig die Empfangsantenne für das LLZ in der Richtung der Längsmittelachse des Anhängers 1 anzuordnen.

Für eine besonders einfache und genaue Kurshaltung zur mittigen Erfassung von Unterflurfeuern 2 kann eine abgewinkelte Deichseleinrichtung mit einer zu der Längsmittelachse des Anhängers 1 seitlich versetzten Anordnung zur unsymmetrischen Ankopplung an eine Anhängerkupplung eines Zugfahrzeuges 8 vorteilhaft sein. So kann die Längsmittelachse der Vorrichtung in die Flucht eines Fahrersitzplatzes des Zugfahrzeugs gebracht werden, wodurch ein parallaxefreies Ansteuern der Feuer 2 möglich ist.

Zur Verifikation einer Position eines defekten Feuers 2, 24 oder außerhalb eines Flugplatzgeländes oder zur Beschränkung des geografischen Nutzungsbereiches einer erfindungsgemäßen Vorrichtung kann es vorteilhaft sein, wenn die Vorrichtung ferner ein zur Bestimmung einer geografischen Absolutposition geeignetes Ortsbestimmungsmodul umfasst, insbesondere, wenn das Ortsbestimmungsmodul eine Empfangs- und Auswerteeinrichtung für wenigstens ein Satellitennavigationssystem, wie GPS (Global Positioning System), Differential-GPS oder GALILEO (Europäisches Satellitennavigationssystem), und/oder ein terrestrisches Positionsbestimmungssystem, wie DECCA (Funksendergestützt), umfasst.

Jedoch auch zur Beschränkung des geografischen Nutzungsbereiches einer erfindungsgemäßen Vorrichtung und des erfindungsgemäßen Verfahrens kann eine geografische Ortslage ermittelt und die so erhaltenen Koordinaten mit einem voreingestellten Koordinatenbereich verglichen werden, so dass eine Fehlermeldung ausgegeben wird, wenn die ermittelten Koordinaten außerhalb des voreingestellten Koordinatenbereiches liegen oder keine Koordinaten ermittelt wurden. Dadurch ist es möglich, einen Einsatz der Vorrichtung an unerwünschten Orten, z.B. unter nicht spezifizierten Klimabedingungen, und dadurch möglicherweise verursachte Fehlauswertungen zu vermeiden. Weiterhin kann so eine nicht autorisierte Verwendung des Verfahrens durch Beschaffen von Raubkopien einer das Verfahren verkörpernden Software unterbunden werden.

Schließlich kann diese Funktion auch als Schutz des rechtmäßigen Besitzers und Benutzers vor Diebstahl oder Unterschlagung einer erfindungsgemäßen Vorrichtung und/oder einer das Verfahren verkörpernden Software dienen.

Für die Überprüfung von Flugplatzfeuern insbesondere auf das Einhalten der Vorgaben nach ICA0 Annex 14 erfolgt zweckmäßig eine zugeordnete Signalisierung, wenn bei weniger als einem vorbestimmten Prozentsatz P einer Anzahl von Feuern 2, 24 einer Messreihe weniger als ein voreinstellbarer Wert I der Lichtintensität oder ein voreingestellter Prozentsatz eines vorgegebenen Sollwertes der Lichtintensität erfasst ist.

Dadurch könne nicht nur nicht mehr ordnungsgemäß arbeitende Einzelfeuer 2, 24 protokolliert werden, sondern es kann eine automatische Überprüfung des Feuersystems durchgeführt und das Ergebnis ausgegeben werden, da hierfür nicht nur der Zustand eines Einzelfeuers maßgebend ist, sondern auch der Anteil und die Verteilung nicht mehr ordnungsgemäß arbeitender Feuer. Durch das Verfahren wird so eine fehleranfällige manuelle nachträgliche Auswertung vermieden.

Dies gilt insbesondere, wenn eine zugeordnete Signalisierung erfolgt, wenn bei weniger als einer vorbestimmten Anzahl von einander benachbarten Feuern weniger als ein voreinstellbarer Wert I der Lichtintensität oder ein voreingestellter Prozentsatz eines vorgegebenen Sollwertes der Lichtintensität erfasst ist.

Für eine über die messtechnische Auswertung hinaus gehende Analyse der Feuer 2, 24 ist es vorteilhaft, wenn die erfassten Intensitätswerte eines Feuers in ein farbiges Bild umgesetzt werden, bei dem Intensitätswertebereiche einer Farbe oder einem Farbwertebereich zugeordnet werden, so dass ein farbiges Bild der erfassten Intensitätsverteilung erhalten wird. Daraus kann ein erfahrener Fachmann auf dem Gebiet der Flugfeuer weitere Schlüsse ziehen, zum Beispiel ein gesprungenes Prisma eines Feuers 2, 24 erkennen, bevor das Feuer 2, 24 ausfällt oder z.B. durch Feuchtigkeitseintritt unbrauchbar wird.

Es kann darüber hinaus vorteilhaft sein, wenn zum Erhalt vergleichbarer Messergebnisse bei Tagmessung oder bei hoher Allgemeinbeleuchtung in der Umgebung vor einer Messreihe eine Messung manuell ausgelöst wird und das so erhaltene Messergebnis als Offset von den Messergebnissen der nachfolgenden Messreihe abgezogen wird.

Zur Überprüfung der gesamten Vorgaben für die Mindestlichtstärken eines Feuers 2, 24 auch unter seitlichen Winkels ist es vorteilhaft, wenn für die Auswertung der Messungen aus der Gesamtheit des lichtempfindlichen Sensorelemente ein oder mehrere vorbestimmte Bereiche (Beam-Zonen) ausgewählt werden und für jeden Bereich gesondert eine durchschnittliche Lichtintensität ermittelt wird und ein Vergleich der gemessenen durchschnittlichen Lichtintensität mit einem voreingestellten Sollwert vorgenommen wird.

Zur Kompensation von Fahrfehlern ist es zweckmäßig, wenn ein Überfahren eines Feuers 2, 24 außermittig bezogen auf die Längsmittelachse quantitativ über die mehreren Näherungssensoren 22, 25 erfasst wird und die Lage des oder der vorbestimmten Bereiche aus der Matrix der Sensorelemente entsprechend der erfassten Abweichung kompensiert wird.

Für die Überprüfung von Leuchtmitteln in Form reflektierender Markierungen, beispielsweise Fahrbahnmarkierungen, kann die erfindungsgemäße Vorrichtung ebenfalls zweckmäßig verwendet werden. Dazu ist zweckmäßig am oberen und/oder unteren und/oder seitlichen Rand der Streuscheibe 10 eine oder mehrere Lichtquellen anzubringen, die zur Abgabe eines gleichmäßigen und reproduzierbaren Lichtstromes zweckmäßig aus einer spannungs- und/oder stromgeregelten Stromversorgung betrieben werden. Für entsprechende Messungen ist es dabei zweckmäßig, beispielsweise eine Triggerung nur über das Wegmesssystem derart vorzunehmen, dass z.B. eine Generierung eines Triggersignals M zur Auslösung des Einlesens von Signalen von den Sensorelementen der Messeinrichtung 15 alle 20 cm erfolgt (entsprechend nach Erfassung von 100 Impulsen des Drehimpulsgebers 19).

## Patentansprüche

1. Vorrichtung zur Überprüfung von Leuchtmitteln und Lichtsignalen (2, 24) insbesondere an Verkehrswegen, enthaltend:
eine Messeinrichtung (15) mit einer Vielzahl von lichtempfindlichen und zur Messung von Lichtintensitäten geeigneten Sensorelementen, vorzugsweise angeordnet in Form einer Matrix,
eine transluzente Streuscheibe (10) angeordnet zwischen der Messeinrichtung (15) und dem zu überprüfenden Leuchtmittel (2, 24),
ein Gehäuse (9), das zumindest die Sensorelemente der Messeinrichtung (15) aufnimmt und das an einer Seite wenigstens teilweise durch die Streuscheibe (10) abgeschlossen ist, und mit einer Längsachse, die in wenigstens einer Ebene die Hauptmessrichtung definiert, **gekennzeichnet durch** eine über die Streuscheibe hinausragende Gehäuseverlängerung mit einer geschlossenen Rückwand zur Bildung eines im Wesentlichen nur nach unten offenen vor Streulicht weitgehend geschützten Raums (14) von vorzugsweise wenigstens 1,5 m Länge.

2. Vorrichtung nach einem der vorhergehenden Ansprüche, **dadurch gekennzeichnet, dass** die Messeinrichtung (15) wenigstens 20.000, vorzugsweise 300.000, weiter vorzugsweise mehr als 700.000, insbesondere mehr als 1.300.000 Sensorelemente umfasst.

3. Vorrichtung nach dem vorhergehenden Anspruch, **dadurch gekennzeichnet, dass** jeweils eine Anzahl von 2², 2⁴ oder 2⁶ Sensorelementen zur Erhöhung der Empfindlichkeit und/oder der erzielbaren Messfrequenz zu einem einzigen effektiven Sensorelement zusammenschaltbar sind.

4. Vorrichtung nach einem der vorhergehenden Ansprüche, **dadurch gekennzeichnet, dass** die Sensorelemente vorzugsweise durch lichtempfindliche ladungsgekoppelte Metalloxid-Halbleiterbauelemete gebildet sind.

5. Vorrichtung nach einem der vorhergehenden Ansprüche, **dadurch gekennzeichnet, dass** die Sensorelemente der Messeinrichtung (15) in Form einer Matrix angeordnet sind, die ein Breiten/Höhen-Verhältnis von wenigstens 1:1, vorzugsweise zwischen etwa 2:1 und 4:1, besonders bevorzugt nicht mehr als etwa 5:1 aufweist.

6. Vorrichtung nach einem der vorhergehenden Ansprüche, **dadurch gekennzeichnet, dass** sich die Sensorelemente-Matrix der Messeinrichtung (15) über eine Fläche von nicht mehr als 100 cm² erstreckt.

7. Vorrichtung nach dem vorhergehenden Anspruch, **dadurch gekennzeichnet, dass** die Messeinrichtung (15) ferner eine Abbildungsoptik (17) umfasst, die vorzugsweise einen Bildwinkel von 50° bis 120°, insbesondere um etwa 90° horizontal und 70° vertikal, aufweist und weiter vorzugsweise hinsichtlich ihrer Abbildungseigenschaften auf einen Objektabstand von 200 mm bis 500 mm optimiert ist.

8. Vorrichtung nach einem der vorhergehenden Ansprüche, **dadurch gekennzeichnet, dass** die Streuscheibe (10) als Mattscheibe, Überfangstreuscheibe, oder oberflächenmattierte Projektionsscheibe ausgebildet ist.

9. Vorrichtung nach einem der vorhergehenden Ansprüche, **dadurch gekennzeichnet, dass** die Streuscheibe (10) im wesentlichen aus einem Mineralglas oder einem Kunststoff, wie Acrylglas, Polycarbonat, Celluloseacetat oder PMMA besteht, und vorzugsweise in wenigstens einer Ebene annähernd rechtwinklig zu der Längsachse der Vorrichtung ausgerichtet ist.

10. Vorrichtung nach einem der vorergehenden Ansprüche, **dadurch gekennzeichnet, dass** die Vorrichtung ferner noch zusätzliche lichtempfindliche Sensoren (34) aufweist, die mit Farbfiltern versehen sind.

11. Vorrichtung nach einem der vorhergehenden Ansprüche, **dadurch gekennzeichnet, dass** die Vorrichtung ferner ein durch ein oder mehrere Impulssignale (W1) ansteuerbares Präzisionswegmesssystem (4, 19, 20) umfasst.

12. Vorrichtung nach dem vorhergehenden Anspruch, **dadurch gekennzeichnet, dass** das Präzisionswegmesssystem wenigstens ein Reibrad umfasst, das auch ein Laufrad (4) sein kann, sowie einen mit dem Reibrad (4) vorzugsweise schlupffrei gekoppelten Drehimpulsgeber (19) enthält.

13. Vorrichtung nach einem der vorhergehenden Ansprüche, **dadurch gekennzeichnet, dass** die Vorrichtung ferner wenigstens einen Näherungssensor (22, 25) umfasst, der geeignet ist, das Überfahren eines Unterflurfeuers (2) zu erfassen.

14. Vorrichtung nach dem vorhergehenden Anspruch, **dadurch gekennzeichnet, dass** die Vorrichtung mehrere Näherungssensoren (22, 25), vorzugsweise drei bis neun Näherungssensoren (22, 25) umfasst, die in wenigstens einer Ebene im wesentlichen rechtwinklig zur Längsachse und vorzugsweise in einer Reihe und mit annähernd gleichem Abstand voneinander angeordnet sind.

15. Vorrichtung nach einem der vorhergehenden Ansprüche, **dadurch gekennzeichnet, dass** die Vorrichtung ein oder mehrere induktive oder kapazitive Näherungsschalter (22) als Näherungssensoren umfasst.

16. Vorrichtung nach einem der vorhergehenden Ansprüche, **dadurch gekennzeichnet, dass** die Vorrichtung einen oder mehrere optoelektronische Sensoren (25) als Näherungssensoren umfasst.

17. Vorrichtung nach einem der vorhergehenden Ansprüche, **dadurch gekennzeichnet, dass** die Vorrichtung ferner eine Steuerungseinrichtung umfasst, die mit dem einen oder mehreren Näherungssensoren (22, 25) verbunden ist, sowie dem Präzisionswegmesssystem (4, 19, 20) und optional einem manuellen Taster (27), zur Generierung eines Triggersignals (M) zur Auslösung des Einlesens von Signalen von den Sensorelementen der Messeinrichtung (15).

18. Vorrichtung nach einem der vorhergehenden Ansprüche, **dadurch gekennzeichnet, dass** die Vorrichtung ferner eine im Sichtbereich des Bedieners/Fahrers anbringbare im wesentlichen horizontale Balkenanzeige (28) aufweist, wobei die Balkenanzeige (28) eine vorzugsweise ungerade Anzahl von Anzeigeelementen (29, 30, 31) umfasst.

19. Vorrichtung nach Anspruch 18, **dadurch gekennzeichnet, dass** bei der Balkenanzeige (28) jedem Anzeigeelement (29, 30, 31), ausgenommen den beiden äußeren (31), ein Näherungssensor (22, 25) zugeordnet ist und das ferner eine Halteschaltung vorgesehen ist, die ein von einem Näherungssensor (22, 25) abgegebenes Impulssignal für einen vorbestimmten Zeitraum, vorzugsweise im Bereich von etwa 0,1 bis 0,3 s, in ein Ansteuerungssignal für ein Anzeigelement (29, 30) umsetzt.

20. Vorrichtung nach einem der vorhergehenden Ansprüche, **dadurch gekennzeichnet, dass** die Vorrichtung ferner eine Empfangsantenne (33) und ein Empfangsgerät für einen Landekurssender (Localizer, "LLZ") mit einem üblichen aeronautischen Anzeigegerät im Sichtbereich des Bedieners/Fahrers umfasst.

21. Vorrichtung nach einem der vorhergehenden Ansprüche, **dadurch gekennzeichnet, dass** die Vorrichtung als Fahr-zeuganhänger (1) ausgebildet ist, wobei der Fahrzeuganhänger (1) zwei abnehmbare Laufräder (4, 5) sowie eine vorzugsweise ebenfalls abnehmbare Deichseleinrichtung (6) zur Verbindung mit einem Zugfahrzeug (8) umfasst.

22. Vorrichtung nach dem vorhergehenden Anspruch, **gekennzeichnet durch** eine abgewinkelte Deichseleinrichtung (6) mit einer zu der Längsmittelachse der Vorrichtung seitlich versetzten Anordnung zur unsymmetrischen Ankopplung der Vorrichtung an eine Anhängerkupplung (7) eines Zugfahrzeuges (8).

23. Vorrichtung nach einem der vorhergehenden Ansprüche, **dadurch gekennzeichnet, dass** das Gehäuse (9) an wenigstens einer, vorzugsweise drei Seiten (11, 12, 13) der Streuscheibe (10) über diese zur Abschirmung gegen Streulicht hinausragt.

24. Vorrichtung nach den vorhergehenden Ansprüchen, **dadurch gekennzeichnet, dass** die Vorrichtung zum Anbau an ein Fahrzeug ausgebildet ist.

25. Vorrichtung nach einem der vorhergehenden Ansprüche, **dadurch gekennzeichnet, dass** die Vorrichtung ferner ein zur Bestimmung einer geografischen Absolutposition geeignetes Ortsbestimmungsmodul umfasst, wobei das Ortsbestimmungsmodul vorzugsweise eine Empfangs- und Auswerteeinrichtung für wenigstens ein Satellitennavigationssystem, wie GPS, Differential-GPS oder GALILEO, und/oder ein terrestrisches Positionsbestimmungssystem, wie DECCA, umfasst.

26. Verfahren zur Überprüfung von Leuchtmitteln und Lichtsignalen (2, 24) insbesondere an Verkehrswegen, wie einer Landebahnmittellinienbefeuerung bestehend aus mehreren hintereinander entlang einer Linie in einem bestimmten Abstand (C) voneinander angeordneten in die Landebahnoberfläche eingelassenen Unterflurfeuern (2), wobei In einem geringen Abstand von dem Leuchtmittel, insbesondere Feuer (2, 24), eine Streuscheibe (10) angeordnet wird, die wenigstens eine matte Oberfläche aufweist, so dass auf der Streuscheibe (10) ein Bild eines Lichtkegelschnittes des Leuchtmittels oder Feuers (2, 24) entsteht, und Abbilden des Bildes auf der Streuscheibe (10) auf eine Anordnung von lichtempfindlichen Sensorelementen zur Erzeugung eines Ausgangssignals und Auslesen der Ausgangssignale des Sensorelemente zu einem bestimmten Zeitpunkt, vorzugsweise bei Erfassen eines Triggersignals (M), **dadurch gekennzeichnet, dass** das Bild des Lichtkegelschnittes des Leuchtmittels oder Feuers (2, 24) auf der Streuscheibe (10) durch eine über die Streuscheibe hinausragende Gehäuseverlängerung mit einer geschlossenen Rückwand zur Bildung eines im wesentlichen nur nach unten offenen Raumes gegen Streulicht geschützt wird.

27. Verfahren nach Anspruch 26, **dadurch gekennzeichnet, dass** der Abstand (C) etwa 1 m bis 3 m beträgt, vorzugsweise nicht mehr als 2 m, insbesondere etwa 1,5 m.

28. Verfahren nach einem der Ansprüche 26 oder 27, **dadurch gekennzeichnet, dass** das Triggersignal (M) generiert wird, wenn ab der Erfassung eines Impulssignals (W1) eines Näherungssensors (22, 25), mit dem beispielsweise ein Überfahren eines Unterflurfeuers (2) angezeigt wird, oder einer vorgegebenen Anzahl von Impulssgnalen (W1), ein vorbestimmtes Wegsignal für das Zurücklegen eines vorbestimmten Weges seit dem Impulssignal (W1) erfasst wird.

29. Verfahren nach Anspruch 28, **dadurch gekennzeichnet, dass** die Wegmessung durch die Erfassung eines Impulssignals (W1) eines Näherungssensors (22, 25), mit dem beispielsweise ein Überfahren eines Unterflurfeuers (2) angezeigt wird, wahlweise neu gestartet wird, auch wenn bei der vorherigen Messung das vorbestimmte Wegsignal für das Zurücklegen eines vorbestimmten Weges seit dem Impulssignal (W1) noch nicht erfasst worden ist.

30. Verfahren nach einem der Ansprüche 28 oder 29, **dadurch gekennzeichnet, dass** das Wegsignal aus einer vorbestimmten Anzahl von Drehimpulsen besteht.

31. Verfahren oder Vorrichtung nach einem der vorhergehenden Ansprüche, **gekennzeichnet durch** eine zugeordnete Signalisierung, wenn bei weniger als einem vorbestimmten Prozentsatz P einer Anzahl von Feuern einer Messreihe weniger als ein voreinstellbarer Wert (I) oder ein voreingestellter Prozentsatz eines vorgegebenen Sollwertes der Lichtintensität erfasst ist

32. Verfahren oder Vorrichtung nach einem der vorhergehenden Ansprüche, **gekennzeichnet durch** eine zugeordnete Signalisierung, wenn bei weniger als einer vorbestimmten Anzahl von benachbarten Feuern (2, 24) weniger als ein voreinstellbarer Wert (I) oder ein voreingestellter Prozentsatz eines vorgegebenen Sollwertes der Lichtintensität erfasst ist.

33. Verfahren oder Vorrichtung nach einem der vorhergehenden Ansprüche, **gekennzeichnet durch** eine Erfassung der Lage eines passierten Feuers (2, 24) bezüglich einer Längsmittelachse der Vorrichtung und Ausgabe eines der erfassten Lage zugeordneten visuellen und/oder Audiosignals, insbesondere **durch** eine im Sichtbereich des Bedieners/Fahrers angeordnete im wesentlichen horizontale Balkenanzeige (28).

34. Verfahren nach einem der Ansprüche 26 bis 33, bei dem die erfassten Intensitätswerte eines Feuers (2, 24) In ein farbiges Bild umgesetzt werden, bei dem Intensitätswertebereiche einer Farbe oder einem Farbwertebereich zugeordnet werden, so dass ein farbiges Bild der erfassten Intensitätsverteilung erhalten wird.

35. Verfahren nach einem der Ansprüche 26 bis 34, bei dem zum Erhalt vergleichbarer Messergebnlsse bei Tagmessung oder bei hoher Allgemeinbeleuchtung in der Umgebung vor einer Messreihe eine Messung manuell ausgelöst wird und das so erhaltene Messergebnis als Offset von den Messergebnissen der nachfolgenden Messreihe abgezogen wird.

36. Verfahren nach einem der Ansprüche 26 bis 35, **dadurch gekennzeichnet, dass** für die Auswertung der Messungen aus der Gesamtheit der lichtempfindlichen Sensorelemente ein oder mehrere vorbestimmte Bereiche ausgewählt werden und für jeden Bereich gesondert eine durchschnittliche Lichtintensität ermittelt wird und ein Vergleich der gemessenen durchschnittlichen Lichtintensität mit einem voreingestellten Sollwert vorgenommen wird.

37. Verfahren nach Anspruch 36, **dadurch gekennzeichnet, dass** ein Überfahren eines Feuers (2, 24) außermittig bezogen auf die Längsmittelachse quantitativ erfasst wird und die Lage des oder der vorbestimmten Bereiche aus der Matrix der Sensorelemente entsprechend der erfassten Abweichung kompensiert wird.

38. Verfahren nach einem der Ansprüche 26 bis 37, bei dem eine geografische Ortslage ermittelt und die so erhaltenen Koordinaten mit einem voreingestellten Koordinatenbereich verglichen werden, sowie eine Fehlermeldung ausgegeben wird, wenn die ermittelten Koordinaten außerhalb des voreingestellten Koordinatenbereiches liegen oder keine Koordinaten ermittelt wurden.

## Claims

1. Device for checking illuminants and light signals (2, 24), particularly on traffic routes, said device containing:
a measuring apparatus (15) with a large number of light-sensitive sensor elements suitable for measuring light intensities and preferably arranged in the form of a matrix; a translucent diffusing screen (10) arranged between the measuring apparatus (15) and the illuminant (2, 24) to be checked;
a housing (9) which receives at least the sensor elements of the measuring apparatus (15) and which is closed off on one side, at least partly, by the diffusing screen (10), and having a longitudinal axis which defines, in at least one plane, the main direction of measurement, **characterised by** a prolongation of the housing which projects beyond the diffusing screen and has a closed rear wall, for the purpose of forming a space (14) preferably at least 1.5 m in length, which is open essentially only in the downward direction and is largely protected against stray light.

2. Device according to one of the preceding claims, **characterised in that** the measuring apparatus (15) comprises at least 20,000, preferably 300,000, more preferably more than 700,000, and particularly more than 1,300,000 sensor elements.

3. Device according to the preceding claim, **characterised in that** it is possible to connect together a number of 2², 2⁴, or 2⁶ sensor elements to form a single effective sensor element in each case, in order to increase the sensitivity and/or the achievable measurement frequency.

4. Device according to one of the preceding claims, **characterised in that** the sensor elements are preferably formed by light-sensitive, charge-coupled metal oxide semiconductor components.

5. Device according to one of the preceding claims, **characterised in that** the sensor elements of the measuring apparatus (15) are arranged in the form of a matrix which has a width/height ratio of at least 1:1, preferably between about 2:1 and 4:1 and particularly preferably not more than about 5:1.

6. Device according to one of the preceding claims, **characterised in that** the sensor-elements matrix of the measuring apparatus (15) extends over an area of not more than 100 cm².

7. Device according to the preceding claim, **characterised in that** the measuring apparatus (15) further comprises an imaging optical system (17) which preferably has an angle of view of 50° to 120°, particularly by about 90° horizontally and 70° vertically, and is further preferably optimised, in respect of its imaging properties, over an object distance of 200 mm to 500 mm.

8. Device according to one of the preceding claims, **characterised in that** the diffusing screen (10) is constructed as a matt screen, flashed diffusing screen or surface-matted projection screen.

9. Device according to one of the preceding claims, **characterised in that** the diffusing screen (10) essentially consists of a mineral glass or a plastic, such as acrylic glass, polycarbonate, cellulose acetate or PMMA, and is preferably oriented, within at least one plane, approximately at right angles to the longitudinal axis of the device.

10. Device according to one of the preceding claims, **characterised in that** said device has still further, additional light-sensitive sensors (34) which are provided with colour filters.

11. Device according to one of the preceding claims, **characterised in that** said device further comprises a precision route-measuring system (4, 19, 20) which can be activated by one or more pulse signals (W1).

12. Device according to the preceding claim, **characterised in that** the precision route-measuring system comprises at least one friction wheel, which may also be a running wheel (4), and also contains a rotary pulse encoder (19) which is coupled, preferably in a slip-free manner, to the friction wheel (4).

13. Device according to one of the preceding claims, **characterised in that** said device further comprises at least one proximity sensor (22, 25) which is suitable for detecting passage over a flush type light (2).

14. Device according to the preceding claim, **characterised in that** said device comprises a number of proximity sensors (22, 25), preferably three to nine proximity sensors (22, 25), which are arranged in at least one plane, essentially at right angles to the longitudinal axis and preferably in a row and at approximately the same distance from one another.

15. Device according to one of the preceding claims, **characterised in that** said device comprises one or more inductive or capacitive proximity switches (22) as proximity sensors.

16. Device according to one of the preceding claims, **characterised in that** said device comprises one or more opto-electronic sensors (25) as proximity sensors.

17. Device according to one of the preceding claims, **characterised in that** said device further comprises a control apparatus which is connected to the one or more proximity sensors (22, 25) and also to the precision route-measuring system (4, 19, 20) and optionally to a manual key (27) for generating a triggering signal (M) for triggering the reading-in of signals from the sensor elements of the measuring apparatus (15).

18. Device according to one of the preceding claims, **characterised in that** said device further has an essentially horizontal bar display (28) which can be fitted within visual range of the operator/driver, said bar display (28) comprising a preferably odd number of display elements (29, 30, 31).

19. Device according to claim 18, **characterised in that**, in the case of the bar display (28), a proximity sensor (22, 25) is associated with each display element (29, 30, 31) with the exception of the two outer ones (31), and that there is further provided a holding circuit which converts a pulse signal emitted by a proximity sensor (22, 25) for a predetermined period of time, preferably in the range from about 0.1 to 0.3 s, into an activating signal for a display element (29, 30).

20. Device according to one of the preceding claims, **characterised in that** said device further comprises a receiving antenna (33) and a receiver for a localizer course transmitter (localizer, "LLZ") with an ordinary aeronautical display unit within visual range of the operator/driver.

21. Device according to one of the preceding claims, **characterised in that** said device is constructed as a vehicle trailer (1), said vehicle trailer (1) comprising two removable running wheels (4, 5) and also a draw-bar apparatus (6), which is preferably likewise removable, for connection to a towing vehicle (8).

22. Device according to the preceding claim, **characterised by** an angled tow-bar apparatus (6) with an arrangement, which is offset laterally in relation to the longitudinal central axis of the device, for coupling said device asymmetrically to a trailer coupling (7) of a towing vehicle (8).

23. Device according to one of the preceding claims, **characterised in that** the housing (9) projects beyond the diffusing screen (10) on at least one, and preferably three, sides (11, 12, 13) of said screen, for the purpose of screening against stray light.

24. Device according to the preceding claims, **characterised in that** said device is constructed for attachment to a vehicle.

25. Device according to one of the preceding claims, **characterised in that** said device further comprises a position-finding module which is suitable for finding an absolute geographical position, said position-finding module preferably comprising a receiving and evaluating apparatus for at least one satellite navigation system such as GPS, differential GPS or GALILEO and/or a terrestrial position-finding system such as DECCA.

26. Method of checking illuminants and light signals (2, 24), particularly on traffic routes, such as a runway centre-line lighting system consisting of a number of flush runway lights (2) arranged one behind another along a line at a specific distance (C) from one another and let into the runway surface, there being arranged at a short distance from the illuminant, in particular the light (2, 24), a diffusing screen (10) which has at least one matt surface, so that an image of a light-cone section of the illuminant or light (2, 24) is produced on said diffusing screen (10), and projecting of the image on the diffusing screen (10) onto an arrangement of light-sensitive sensor elements for the purpose of generating an output signal and reading out the output signals of the sensor elements at a specific point in time, preferably on detecting a triggering signal (M), **characterised in that** the image of the light-cone section of the illuminant or light (2, 24) on the diffusing screen (10) is protected against stray light by a prolongation of the housing which projects beyond the diffusing screen and has a closed rear wall for the purpose of forming a space which is open essentially only in the downward direction.

27. Method according to claim 26, **characterised in that** the distance (C) is about 1 m to 3 m, preferably not more than 2 m, and particularly about 1.5 m.

28. Method according to either of claims 26 or 27, **characterised in that** the triggering signal (M) is generated when, from the detection of a pulse signal (W1) of a proximity sensor (22, 25) by means of which, for example, passage over a flush light (2) is displayed, or of a predetermined number of pulse signals (W1), a predetermined route signal for the covering of a predetermined route since the pulse signal (W1) is detected.

29. Method according to claim 28, **characterised in that**, as a result of the detection of a pulse signal (W1) of a proximity sensor (22, 25) by means of which, for example, passage over a flush light (2) is displayed, the route measurement is selectively started afresh, even if, in the previous measurement, the predetermined route signal for the covering of a predetermined route since the pulse signal (W1) has not yet been detected.

30. Method according to either of claims 28 or 29, **characterised in that** the route signal consists of a predetermined number of rotary pulses.

31. Method or device according to one of the preceding claims, **characterised by** associated signalling if, in the case of less than a predetermined percentage P of a number of lights in a measuring series, less than a pre-settable value (I) or a preset percentage of a predetermined ideal value of the light intensity is detected.

32. Method or device according to one of the preceding claims, **characterised by** associated signalling if, in the case of less than a predetermined number of adjacent lights (2, 24), less than a pre-settable value (I) or a preset percentage of a predetermined ideal value of the light intensity is detected.

33. Method or device according to one of the preceding claims, **characterised by** detection of the position of a light (2, 24) that has been passed over, with respect to a longitudinal central axis of the device, and the emission of a visual and/or audio signal, which is associated with the detected position, particularly by an essentially horizontal bar display (28) arranged within visual range of the operator/driver.

34. Method according to one of claims 26 to 33, in which the detected intensity values of a light (2, 24) are converted into a coloured image in which intensity-value ranges are associated with a colour or a range of colour values, so that a coloured image of the intensity distribution detected is obtained.

35. Method according to one of claims 26 to 34, in which, for the purpose of obtaining comparable measurement results in the case of daytime measuring or in the case of high general illumination in the environment, prior to a series of measurements, a measurement is triggered manually and the measurement result thus obtained is deducted, as an offset, from the measurement results of the subsequent series of measurements.

36. Method according to one of claims 26 to 35, **characterised in that**, for evaluating the measurements from the totality of the light-sensitive sensor elements, one or more predetermined ranges are selected and an average light intensity is ascertained for each range separately and a comparison of the measured average light intensity with a preset ideal value is carried out.

37. Method according to claim 36, **characterised in that** passage over a light (2, 24) in an out-of-centre manner, referred to the longitudinal central axis, is detected quantitatively and the position of the predetermined range or ranges from the matrix of the sensor elements is compensated for according to the deviation detected.

38. Method according to one of claims 26 to 37, in which a geographical location is ascertained and the coordinates thus obtained are compared with a preset range of coordinates, and an error message is emitted if the coordinates ascertained lie outside the preset range of coordinates or no coordinates have been ascertained.

## Revendications

1. Dispositif de test de moyens d'éclairage et de signaux lumineux (2, 24), en particulier sur des voies de circulation, comprenant :
un système de mesure (15) doté d'une pluralité d'éléments détecteurs photosensibles et adaptés pour mesurer des intensités lumineuses, de préférence disposés en forme de matrice,
un diffuseur translucide (10) disposé entre le système de mesure (15) et le moyen d'éclairage (2, 24) à tester,
un boîtier (9) dans lequel sont logés au moins les éléments détecteurs du système de mesure (15) et qui est fermé au moins en partie sur un côté par le diffuseur (10), et présentant un axe longitudinal qui définit la direction de mesure principale dans au moins un plan, **caractérisé par** un prolongement du boîtier qui dépasse du diffuseur et présente une paroi arrière fermée de façon à former un espace ouvert pratiquement vers le bas uniquement, largement protégé de la lumière diffusée (14) et ayant de préférence une longueur l'au moins 1,5 m.

2. Dispositif selon l'une des revendications précédentes, **caractérisé en ce que** le système de mesure (15) comprend au moins 20 000, de préférence 300 000, plus préférentiellement plus de 700 000, en particulier plus de 1 300 000 éléments détecteurs.

3. Dispositif selon la revendication précédente, **caractérisé en ce que** des éléments détecteurs peuvent être interconnectés en un nombre égal à 2², 2⁴ ou 2⁶, respectivement, pour former un élément détecteur efficace unique afin d'augmenter la sensibilité et/ou la fréquence de mesure qui peut être atteinte.

4. Dispositif selon l'une des revendications précédentes, **caractérisé en ce que** les éléments détecteurs sont de préférence formés par des composants semi-conducteurs photosensibles à couplage de charges à base d'oxydes métalliques.

5. Dispositif selon l'une des revendications précédentes, **caractérisé en ce que** les éléments détecteurs du système de mesure (15) sont disposé en forme de matrice présentant un rapport largeur/hauteur d'au moins 1:1, de préférence allant de 2:1 à 4:1 environ et de façon particulièrement préférée non supérieur à 5:1 environ.

6. Dispositif selon l'une des revendications précédentes, **caractérisé en ce que** la matrice d'éléments détecteurs du système de mesure (15) s'étend sur une superficie non supérieure à 100 cm².

7. Dispositif selon la revendication précédente, **caractérisé en ce que** le système de mesure (15) comprend en outre une optique de reproduction (17) qui présente de préférence un angle d'image de 50° à 120°, en particulier de 90° dans le sens horizontal et 70° dans le sens vertical, et, de préférence également, **en ce que** ses propriétés de reproduction sont optimisées pour une distance à l'objet de 200 mm à 500 mm.

8. Dispositif selon l'une des revendications précédentes, **caractérisé en ce que** le diffuseur (10) est réalisé sous la forme d'un verre dépoli, d'un verre diffusant doublé ou d'un verre de projection dépoli en surface.

9. Dispositif selon l'une des revendications précédentes, **caractérisé en ce que** le diffuseur (10) est constitué essentiellement d'un verre minéral ou d'une matière plastique telle que le verre acrylique, le polycarbonate, l'acétate de cellulose ou le PMMA et de préférence orienté dans au moins un plan approximativement orthogonal à l'axe longitudinal du dispositif.

10. Dispositif selon l'une des revendications précédentes, **caractérisé en ce que** le dispositif présente en outre des détecteurs photosensibles supplémentaires (34) dotés de filtres colorés.

11. Dispositif selon l'une des revendications précédentes, **caractérisé en ce que** le dispositif comprend en outre un système de mesure de course de précision (4, 19, 20) commandable par un ou plusieurs signaux impulsionnels (W1).

12. Dispositif selon la revendication précédente, **caractérisé en ce que** le système de mesure de course de précision comprend au moins une roue de friction, qui peut être aussi une roue de roulement (4), ainsi qu'un transmetteur de moment angulaire (19) de préférence couplé sans glissement avec la roue de friction (4).

13. Dispositif selon l'une des revendications précédentes, **caractérisé en ce que** le dispositif comprend en outre au moins un détecteur de proximité (22, 25) adapté pour détecter le passage sur un feu souterrain (2).

14. Dispositif selon la revendication précédente, **caractérisé en ce que** le dispositif comprend plusieurs détecteurs de proximité (22, 25), de préférence trois à neuf détecteurs de proximité (22, 25), qui sont disposés dans au moins un plan sensiblement orthogonal à l'axe longitudinal et de préférence en ligne et à des intervalles approximativement égaux.

15. Dispositif selon l'une des revendications précédentes, **caractérisé en ce que** le dispositif comprend un ou plusieurs commutateurs inductifs ou capacitifs (22) en tant que détecteurs de proximité.

16. Dispositif selon l'une des revendications précédentes, **caractérisé en ce que** le dispositif comprend un ou plusieurs détecteurs optoélectroniques (25) en tant que détecteurs de proximité.

17. Dispositif selon l'une des revendications précédentes, **caractérisé en ce que** le dispositif comprend en outre un système de commande, relié à un ou plusieurs détecteurs de proximité (22, 25) ainsi qu'au système de mesure de course de précision (4, 19, 20) et facultativement à un bouton-poussoir manuel (27), pour générer un signal de déclenchement (M) servant à lancer l'acquisition de signaux par les éléments détecteurs du système de mesure (15).

18. Dispositif selon l'une des revendications précédentes, **caractérisé en ce que** le dispositif présente en outre un afficheur à barres sensiblement horizontal (28) qui peut être installé dans le champ visuel de l'opérateur/conducteur, ledit afficheur à barres (28) comprenant un nombre d'éléments d'affichage (29, 30, 31) de préférence impair.

19. Dispositif selon la revendication 18, **caractérisé en ce qu'**un détecteur de proximité (22, 25) de l'afficheur à barres (28) est associé à chaque élément d'affichage (29, 30, 31), à l'exception des deux éléments extérieurs (31), et **en ce qu'**il est prévu en outre un circuit de maintien qui convertit un signal impulsionnel délivré par un détecteur de proximité (22, 25) pendant une période prédéfinie, de préférence allant de 0,1 à 0,3 s environ, en un signal d'excitation d'un élément d'affichage (29, 30).

20. Dispositif selon l'une des revendications précédentes, **caractérisé en ce que** le dispositif comprend en outre une antenne réceptrice (33) et un appareil récepteur pour un radiophare d'alignement de piste (localizer, "LLZ") avec un écran de visualisation aéronautique usuel dans le champ visuel de l'opérateur/conducteur.

21. Dispositif selon l'une des revendications précédentes, **caractérisé en ce que** le dispositif est réalisé sous la forme d'une remorque de véhicule (1), ladite remorque de véhicule (1) comprenant deux roules de roulement démontables (4, 5) ainsi qu'un système de timon (6), de préférence démontable lui aussi, pour l'attelage à un véhicule de traction (8).

22. Dispositif selon la revendication précédente, **caractérisé par** un système de timon (6) coudé, présentant une disposition décalée latéralement par rapport à l'axe longitudinal du dispositif afin de permettre un accouplement asymétrique du dispositif à un système d'attelage de remorque (7) d'un véhicule de traction (8).

23. Dispositif selon l'une des revendications précédentes, **caractérisé en ce que** le boîtier (9) dépasse du diffuseur (10) sur au moins un côté, de préférence sur trois côtés (11, 12, 13), afin de protéger ledit diffuseur de la lumière diffusée.

24. Dispositif selon les revendications précédentes, **caractérisé en ce que** le dispositif est conçu pour se monter sur un véhicule.

25. Dispositif selon l'une des revendications précédentes, **caractérisé en ce que** le dispositif comprend en outre un module de localisation adapté pour déterminer une position géographique absolue, ledit module de localisation comprenant de préférence un système de réception et de traitement du signal pour au moins un système de navigation par satellite, par exemple GPS, GPS différentiel ou GALILEO, et/ou un système de détermination de position terrestre, par exemple DECCA.

26. Procédé de test de moyens d'éclairage et de signaux lumineux (2, 24) en particulier sur des voies de circulation, par exemple un système de balisage d'axe de piste d'atterrissage constitué de plusieurs feux souterrains (2) disposés les uns derrière les autres le long d'une ligne à une certaine distance (C) les uns des autres et encastrés dans la surface de la piste d'atterrissage, dans lequel un diffuseur (10) présentant au moins une surface dépolie est disposé à une faible distance du moyen d'éclairage, en particulier du feu (2, 24) de façon à former sur le diffuseur (10) une image d'une section du cône de lumière du moyen d'éclairage ou feu (2, 24), l'image formée sur le diffuseur (10) est reproduite sur un agencement d'éléments détecteurs photosensibles afin de générer un signal de sortie et les signaux de sortie des éléments détecteurs sont acquis à un moment donné, de préférence après détection d'un signal de déclenchement (M), **caractérisé en ce que** l'image de la section de cône lumineux du moyen d'éclairage ou feu (2, 24) sur le diffuseur (10) est protégée de la lumière diffusée par un prolongement du boîtier qui dépasse du diffuseur et présente une paroi arrière fermée de façon à former un espace ouvert pratiquement vers le bas uniquement.

27. Procédé selon la revendication 26, **caractérisé en ce que** la distance (C) mesure de 1 m à 3 m environ, de préférence pas plus de 2 m et en particulier environ 1,5 m.

28. Procédé selon l'une des revendications 26 ou 27, **caractérisé en ce que** le signal de déclenchement (M) est généré lorsque, à partir de la détection d'un signal impulsionnel (W1) ou d'un nombre prédéfini de signaux impulsionnels (W1) d'un détecteur de proximité (22, 25), indiquant par exemple le passage sur un feu souterrain (2), un signal de course prédéfini indiquant qu'une course prédéfinie a été parcourue depuis le signal impulsionnel (W1) est détecté.

29. Procédé selon la revendication 28, **caractérisé en ce que** la mesure de course est relancée facultativement par la détection d'un signal impulsionnel (W1) d'un détecteur de proximité (22, 25), indiquant par exemple le passage sur un feu souterrain (2), même si le signal de course prédéfini indiquant qu'une course prédéfinie a été parcourue depuis le signal impulsionnel (W1) de la mesure précédente n'a pas encore été détecté.

30. Procédé selon l'une des revendications 28 ou 29, **caractérisé en ce que** le signal de course se compose d'un nombre prédéfini de moments angulaires.

31. Procédé ou dispositif selon l'une des revendications précédentes, **caractérisé par** une signalisation associée lorsque, en dessous d'un pourcentage P prédéfini du nombre de feux d'une série de mesures inférieure, il est détecté moins qu'une valeur (I) prédéfinissable ou qu'un pourcentage prédéfinissable d'une valeur d'intensité lumineuse théorique prédéfinie.

32. Procédé ou dispositif selon l'une des revendications précédentes, **caractérisé par** une signalisation associée lorsque, en dessous d'un nombre prédéfini de feux (2, 24) voisins, il est détecté moins qu'une valeur (I) prédéfinissable ou qu'un pourcentage prédéfinissable d'une valeur d'intensité lumineuse théorique prédéfinie.

33. Procédé ou dispositif selon l'une des revendications précédentes, **caractérisé par** une détection de la position d'un feu (2, 24) franchi par à un axe longitudinal du dispositif et par l'émission d'un signal visuel et/ou acoustique associé à la position détectée, en particulier par un afficheur à barres (28) sensiblement horizontal disposé dans le champ visuel de l'opérateur/conducteur.

34. Procédé selon l'une des revendications 26 à 33, dans lequel les valeurs d'intensité acquises pour un feu (2, 24) sont converties en une image en couleurs, des plages de valeurs d'intensité étant associées à une couleur ou à une gamme de valeurs de couleurs de façon à obtenir une image en couleurs de la distribution des valeurs d'intensité acquises.

35. Procédé selon l'une des revendications 26 à 34, dans lequel, pour obtenir des résultats de mesure comparable lors d'une mesure diurne ou en présence d'un éclairage général dans le voisinage avant une série de mesures, une mesure est déclenchée manuellement et le résultat de mesure ainsi obtenu est soustrait en quant que décalage des résultats de mesure de la série de mesures suivantes.

36. Procédé selon l'une des revendications 26 à 35, **caractérisé en ce que**, pour exploiter les mesures de l'ensemble des éléments détecteurs photosensibles, une ou plusieurs zones prédéfinies sont sélectionnées, une intensité lumineuse moyenne est déterminée pour chaque zone séparément et l'intensité lumineuse moyenne mesurée est comparée à une valeur théorique prédéfinie.

37. Procédé selon la revendication 36, **caractérisé en ce qu'**un passage sur un feu (2, 24) désaxé par rapport à l'axe longitudinal est quantifié et **en ce que** la position de la ou des zones prédéfinies de la matrice d'éléments détecteurs est compensée en fonction de l'écart détecté.

38. Procédé selon l'une des revendications 26 à 37, dans lequel une position géographique est déterminée et les coordonnées ainsi obtenues sont comparées à une plage de coordonnées prédéfinie et un message d'erreur est émis lorsque les coordonnées déterminées se situent en dehors de la plage de coordonnées prédéfinie.
